# EUROPEAN PATENT APPLICATION

(11) **EP 4 701 316 A1**
(43) Date of publication of application: **25.02.2026**
(21) Application number: 24791749.5
(22) Date of filing: 01.03.2024
(51) Int. Cl.: H04W 74/08

(54) **CLOCK QUALITY INFORMATION RECEIVING METHOD AND SENDING METHOD, APPARATUS AND STORAGE MEDIUM**

(30) Priority: 21.04.2023 CN 202310436355
(71) Applicant: Datang Mobile Communications Equipment Co., Ltd., Beijing 100085 (CN)
(72) Inventor: CHEN, Li, Beijing 100085 (CN); YAN, Nan, Beijing 100085 (CN); NI, Chunlin, Beijing 100085 (CN)
(74) Representative: Ipsilon
(86) International application number: PCT/CN2024/079509
(87) International publication number: WO 2024/217161

(57) **Abstract**

Embodiments of the present application provide a clock quality information receiving method and sending method, an apparatus, and a storage medium. The receiving method comprises: when it is determined that a clock synchronization status changes, initiating a random access process to a network device; and during the random access process, receiving clock quality information sent by the network device.

## Description

### CROSS-REFERENCES TO RELATED APPLICATIONS

The present application claims priority to Chinese patent application No. 202310436355.4 filed on April 21, 2023, entitled "Clock Quality Information Receiving Method and Sending Method, Apparatus and Storage Medium", which is hereby incorporated by reference in its entirety.

### FIELD

The present application relates to the field of communication, and in particular, to methods and apparatuses for clock quality information reception and transmission and storage media.

### BACKGROUND

A time sensitive communication (TSC) service has been introduced in the fifth-generation mobile communication (5G). In certain scenarios, a next generation NodeB (gNB) has multiple possible synchronization clock sources. In case that an actual clock synchronization source for the gNB has changed, clock information for the gNB changes. Consequently, both a core network (CN) and a user equipment (UE) need to obtain new clock information to achieve network-wide timing synchronization.

UE in an idle or inactive state must enter a radio resource control (RRC) connected state through a random access procedure and an RRC signaling before receiving clock quality information. In case that a large number of UEs in the idle or inactive state need to obtain the clock quality information, signaling overhead and resulting radio interface resource overhead are significant, but the amount of clock quality information the UEs actually need to obtain is relatively small.

### BRIEF SUMMARY

In view of the problems above, embodiments of the present application provide methods and apparatuses for clock quality information reception and transmission and storage media.

An embodiment of the present application provides a method for clock quality information reception, performed by a user equipment (UE) in an idle or inactive state, including: determining that a clock synchronization status has changed, initiating a random access procedure to a network device; and receiving clock quality information transmitted from the network device during the random access procedure.

In some embodiments, receiving the clock quality information transmitted from the network device includes receiving a contention resolution message transmitted from the network device, where the contention resolution message carries the clock quality information.

In some embodiments, receiving the clock quality information transmitted from the network device includes receiving a downlink radio resource control (RRC) message transmitted from the network device, where the downlink RRC message carries the clock quality information.

In some embodiments, the method further includes: transmitting a random access request message to the network device based on a dedicated random access resource and/or a dedicated random access preamble configured by the network device; where the dedicated random access resource and/or the dedicated random access preamble are dedicated to at least one UE or UE group receiving same clock quality information, or to at least one UE or UE group receiving a same category of clock quality information, or to at least one UE or UE group that retrieves clock quality information;
where receiving the clock quality information transmitted from the network device includes receiving a random access response message transmitted from the network device, where the random access response message carries the clock quality information.

In some embodiments, the clock quality information is indicated by at least one of: a first indicator field in a downlink media access control (MAC) control element (CE) transmitting the contention resolution message; or a second indicator field in a MAC subheader corresponding to the downlink MAC CE transmitting the contention resolution message.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In some embodiments, the method further includes: transmitting a retrieve clock quality information request to the network device.

In some embodiments, transmitting the retrieve clock quality information request to the network device includes: transmitting an uplink radio resource control (RRC) message to the network device, where the uplink RRC message carries the retrieve clock quality information request; where for a UE in the idle state, the uplink RRC message is an RRC connection setup request message; and for a UE in the inactive state, the uplink RRC message is an RRC connection resume request message.

In some embodiments, a connection establishment cause in the RRC connection setup request message includes the retrieve clock quality information request, or a connection resume cause in the RRC connection resume request message includes the retrieve clock quality information request, or the uplink RRC message includes an information element of the retrieve clock quality information request.

In some embodiments, transmitting the retrieve clock quality information request to the network device includes: transmitting an uplink media access control (MAC) control element (CE) to the network device, wherein the uplink MAC CE carries the retrieve clock quality information request; and the uplink MAC CE is transmitted through Msg3 of a 4-step random access procedure or MSGA of a 2-step random access procedure.

In some embodiments, the uplink MAC CE further carries identity information of the UE in the idle or inactive state.

In some embodiments, after receiving the clock quality information transmitted from the network device, the method further includes: entering an idle or inactive state.

In some embodiments, the clock quality information is a clock quality metric, or an acceptable/not acceptable indication; where the clock quality metric includes one or more of: clock accuracy; traceability to universal time coordinated (UTC) and to a global navigation satellite system (GNSS); frequency stability; a parent time source; or a clock synchronization status.

In some embodiments, the clock quality information is an acceptable/not acceptable indication.

An embodiment of the present application provides a method for clock quality information transmission, performed by a network device, including: transmitting clock quality information to a user equipment (UE) during a random access procedure; where the UE is in an idle or inactive state, and the random access procedure is triggered in case that a clock synchronization status has changed.

In some embodiments, transmitting the clock quality information to the UE includes transmitting a contention resolution message to the UE, where the contention resolution message carries the clock quality information.

In some embodiments, clock quality information transmitted from the network device includes transmitting a downlink (RRC) message to the UE, where the downlink RRC message carries the clock quality information.

In some embodiments, the method further includes: configuring a dedicated random access resource and/or a dedicated random access preamble for at least one UE or UE group receiving same clock quality information, or at least one UE or UE group receiving a same category of clock quality information, or at least one UE or UE group that retrieves clock quality information; and indicating a configured dedicated random access resource and/or dedicated random access preamble to the UE;
where transmitting the clock quality information to UE includes transmitting a random access response message to the UE in response to a random access request message transmitted from the UE based on the configured dedicated random access resource and/or dedicated random access preamble, where the random access response message carries the clock quality information.

In some embodiments, the clock quality information is indicated by at least one of: a first indicator field in a downlink media access control (MAC) control element (CE) transmitting the contention resolution message; or a second indicator field in a MAC subheader corresponding to the downlink MAC CE transmitting the contention resolution message.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In some embodiments, the method further includes: receiving a retrieve clock quality information request transmitted from the UE.

In some embodiments, receiving the retrieve clock quality information request transmitted from the UE includes: receiving an uplink radio resource control (RRC) message transmitted from the UE, where the uplink RRC message carries the retrieve clock quality information request; where for a UE in the idle state, the uplink RRC message is an RRC connection setup request message; and for a UE in the inactive state, the uplink RRC message is an RRC connection resume request message.

In some embodiments, the connection setup cause in the RRC connection setup request message includes the retrieve clock quality information request, or the connection resume cause in the RRC connection resume request message includes the retrieve clock quality information request, or the uplink RRC message includes an information element of the retrieve clock quality information request.

In some embodiments, receiving the retrieve clock quality information request transmitted from the UE includes: receiving an uplink media access control (MAC) control element (CE) transmitted from the UE, wherein the uplink MAC CE carries the retrieve clock quality information request; and the uplink MAC CE is transmitted through Msg3 of a 4-step random access procedure or MSGA of a 2-step random access procedure.

In some embodiments, the uplink MAC CE further carries identity information of the UE in the idle or inactive state.

In some embodiments, the clock quality information is a clock quality metric, or an acceptable/not acceptable indication; where the clock quality metric includes one or more of: clock accuracy; traceability to universal time coordinated (UTC) and to a global navigation satellite system (GNSS); frequency stability; a parent time source; or a clock synchronization status.

In some embodiments, the clock quality information is an acceptable/not acceptable indication.

An embodiment of the present application further provides a user equipment (UE), including: a memory, a transceiver, and a processor; where the memory is used for storing a computer program; a transceiver is used for transmitting and receiving data under control of the processor; and the processor is used for reading the computer program in the memory and performing the method for clock quality information reception described above.

An embodiment of the present application further provides a network device, including a memory, a transceiver, and a processor; where the memory is used for storing a computer program; the transceiver is used for transmitting and receiving data under control of the processor; and the processor is used for reading the computer program stored in the memory and performing the method for clock quality information transmission described above.

An embodiment of the present application further provides an apparatus for clock quality information reception, including: a determining unit, used for determining that a clock synchronization status has changed, initiating a random access procedure to a network device; and a first receiving unit, used for receiving clock quality information transmitted from the network device during the random access procedure.

An embodiment of the present application further provides an apparatus for clock quality information transmission, including: a second transmitting unit, used for transmitting clock quality information to a user equipment (UE) during a random access procedure; where the UE is in an idle or inactive state, and the random access procedure is triggered in case that a clock synchronization status has changed.

An embodiment of the present application further provides a non-transitory readable storage medium storing a computer program where the computer program cause a processor to perform the method for clock quality information reception provided above or the method for clock quality information transmission provided in the second above.

An embodiment of the present application further provides a communication device-readable storage medium storing a computer program where the computer program cause a processor to perform the method for clock quality information reception provided above or the method for clock quality information transmission provided in the second above.

An embodiment of the present application further provides a chip product-readable storage medium storing a computer program where the computer program cause a processor to perform the method for clock quality information reception provided above or the method for clock quality information transmission provided in the second above.

In methods and apparatuses for clock quality information reception and transmission and a storage medium provided in embodiments of the present application, a user equipment in an idle or inactive state receives clock quality information transmitted from a network device during a random access procedure. This allows the UE to receive clock quality information without completing the entire signaling procedure for entering an RRC connected state, saving radio interface resource overhead and enabling the UE to retrieve clock quality information more quickly and efficiently.

### BRIEF DESCRIPTION OF THE DRAWINGS

To clearly illustrate solutions in the embodiments of the present application or in related art, the drawings used in the description of the embodiments or in related art are briefly described below. The drawings in the following description are only some embodiments of the present application, and other drawings may be obtained according to these drawings without any creative effort for those skilled in the art.
FIG. 1 is a schematic diagram of a schematic diagram of a network device with multiple possible synchronization clock sources according to the related art;
FIG. 2 is a schematic flowchart of a radio resource control (RRC) connection setup procedure through 4-step random access and 2-step random access according to the related art;
FIG. 3 is a schematic flowchart of an RRC connection resume procedure through 4-step random access and 2-step random access according to the related art;
FIG. 4 is a schematic flowchart of a method for clock quality information reception according to an embodiment of the present application;
FIG. 5 is a schematic flowchart of a method for clock quality information transmission according to an embodiment of the present application;
FIG. 6 is a first schematic flowchart of a method for clock quality information reception performed by a user equipment in an idle state according to an embodiment of the present application;
FIG. 7 is a first schematic flowchart of a method for clock quality information reception performed by a user equipment in an inactive state according to an embodiment of the present application;
FIG. 8 is a schematic diagram of three types of media access control (MAC) protocol data unit (PDU) formats in a contention resolution message carrying clock quality information according to an embodiment of the present application;
FIG. 9 is a second schematic flowchart of a method for clock quality information reception performed by a user equipment in an idle state according to an embodiment of the present application;
FIG. 10 is a second schematic flowchart of a method for clock quality information reception performed by a user equipment in an inactive state according to an embodiment of the present application;
FIG. 11 is a third schematic flowchart of a method for clock quality information reception performed by a user equipment in an idle state according to an embodiment of the present application;
FIG. 12 is a third schematic flowchart of a method for clock quality information reception performed by a user equipment in an inactive state according to an embodiment of the present application;
FIG. 13 is a fourth schematic flowchart of a method for clock quality information reception performed by a user equipment in an idle state according to an embodiment of the present application;
FIG. 14 is a fourth schematic flowchart of a method for clock quality information reception performed by a user equipment in an inactive state according to an embodiment of the present application;
FIG. 15 is a first schematic flowchart of a method for clock quality information reception and transmission according to an embodiment of the present application;
FIG. 16 is a second schematic flowchart of a method for clock quality information reception and transmission according to an embodiment of the present application;
FIG. 17 is a schematic structural diagram of a terminal according to an embodiment of the present application;
FIG. 18 is a schematic structural diagram of a network device according to an embodiment of the present application;
FIG. 19 is a schematic structural diagram of an apparatus for clock quality information reception according to an embodiment of the present application; and
FIG. 20 is a schematic structural diagram of an apparatus for clock quality information transmission according to an embodiment of the present application.

### DETAILED DESCRIPTION

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

In order to describe solutions in the embodiments of the present application well, relevant knowledge is introduced below.

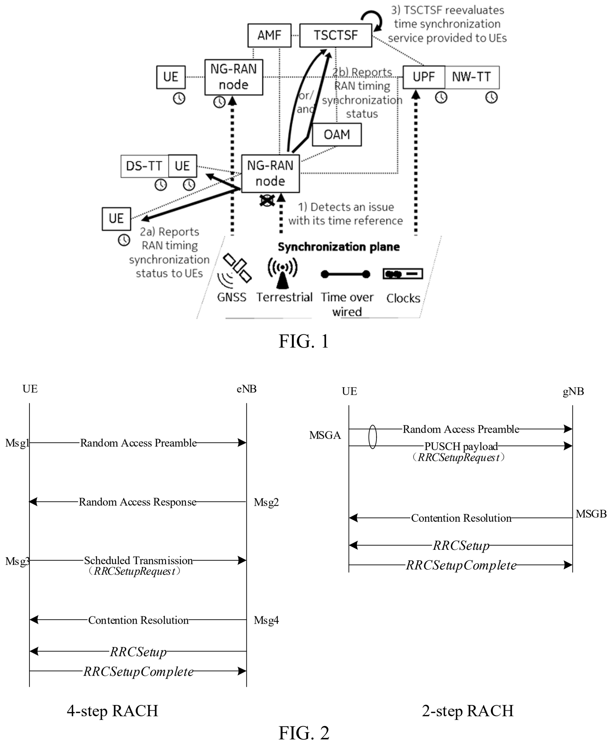

FIG. 1 is a schematic diagram of a schematic diagram of a network device with multiple possible synchronization clock sources according to the related art. As shown in FIG. 1, NG-RAN stands for a next generation radio access network connected to a 5G core network (CN). The NG-RAN node is a base station. UPF stands for a user plane function, AMF stands for access and mobility management function, OAM stands for operation administration and maintenance, TSCTSF stands for time sensitive communication and time synchronization function, GNSS stands for global navigation satellite system, Terrestrial stands for terrestrial, Time over wired stands for time over wired, Clocks stands for clocks, and Synchronization Plane stands for a synchronization plane.

The base station has multiple possible synchronization clock sources. In case that an actual clock synchronization source used in the base station has changed, clock information for the base station also changes. Consequently, both the CN and a user equipment (UE) need to obtain new clock information to achieve network-wide timing synchronization.

The base station determines a change of the clock information through predefined thresholds for the timing synchronization status attributes (as shown in Table 1). In case that the network timing synchronization status exceeds the threshold, or in case that the network timing synchronization status returns within the threshold, the base station notifies the core network and the UE (detects an issue with this time reference).

**Table 1 Information elements included in NG-RAN or UPF timing synchronization status information**

| **Information Name** | **Description** | **Category** |
|---|---|---|
| Synchronization state | Indicates the state of the node synchronization, represented by the values "Locked", "Holdover", or "Freerun". | Optional |
| Synchronization performance | Traceable to UTC | Optional |
| | Traceable to GNSS | |
| | Frequency stability | |
| Clock quality | clock accuracy | Optional |
| Parent time source | Describes the primary source the node is currently using, represented by the values "SyncE", "PTP", "GNSS", "atomic clock", "terrestrial radio", "serial time code", "NTP", "hand set", "other". | Optional |
| NOTE1: Clock is in the "Locked", "Holdover", or "Freerun" mode, as defined in ITU-TG.810[164]. | | |

The clock change information transmitted from the base station to the UE depends on configuration of the core network. In an embodiment, the application function (AF) or unified data management (UDM) indicates the base station to transmit synchronization status change information "Clock Quality Detail Level" to the UE through the AMF, that is, the clock quality information. The clock quality information contains different types. Based on the indication information transmitted from the core network, the base station determines to transmit the clock quality information to the UE in case that a clock synchronization status has changed. The core network indicates the specific type of clock quality information to be transmitted (Reports RAN timing synchronization status to UEs).

The core network obtains the clock information as follows that the TSCTSF subscribes synchronization status change information from the base station and reevaluates the time synchronization service provided to the UE(s) based on clock information received from the base station.

The UE obtains clock information as follows that after determining that the clock information has changed, for a UE in a connected state, the base station transmits the clock quality information to the UE through a dedicated RRC signaling. For a UE in an idle or inactive state, after the clock information changes, the base station transmits a reference report identity (ID) through a system information block (SIB) (in an embodiment, the system message SIB9). For the UE in the idle or inactive state that requires timing synchronization, after receiving the reference report ID in the SIB9 and determining that the clock information has changed, the UE in the idle or inactive state enters the connected state and receive clock quality information through dedicated signaling.

The UE in the idle state enters the connected state using the RRC connection setup procedure, and the UE in the inactive state enters the connected state using the RRC connection resume procedure.

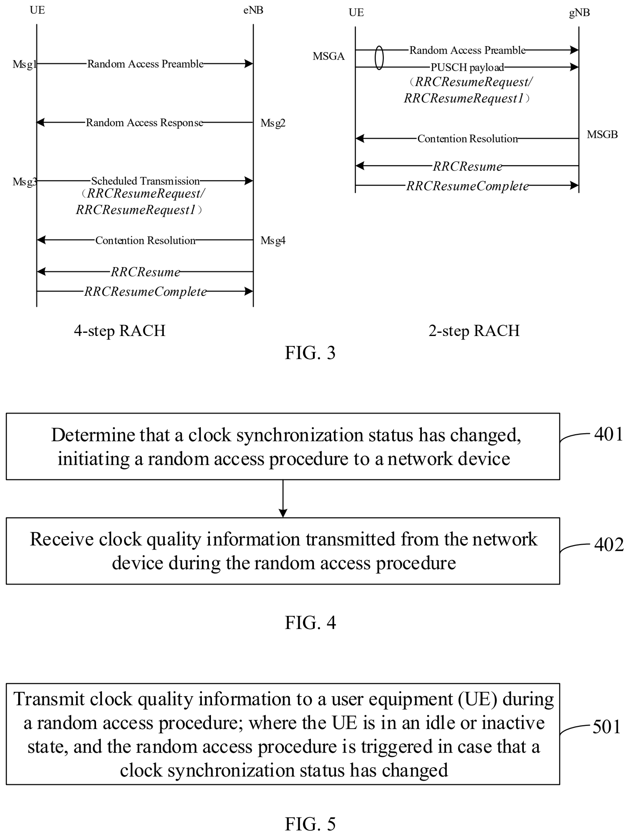

FIG. 2 is a schematic flowchart of an RRC connection setup procedure through 4-step random access and 2-step random access according to the related art. As shown in FIG. 2, 4-step random access (4-Step RACH) includes the following.

Msg1: a UE selects a random access preamble (RAP) and a random access resource, and transmits the selected RAP to a network device (gNB) using the random access resource. The random access resource may be a physical random access channel (PRACH) resource.

Msg2: the network equipment receives the RAP transmitted from the UE and transmits a random access response (RAR) to the UE.

Msg3: the UE transmits an uplink transmission (that is, scheduled transmission) using the uplink scheduled grant specified in Msg2. Different random access schemes use different uplink transmission contents in Msg3, such as the RRC connection setup request (RRCSetupRequest) message. UEs in idle state and UE in connected state may further transmit a media access control control element (MAC CE) scrambled with a specific identifier in Msg3. During the Msg3 phase, the UE transmits a UE-specific identity to the network device, for the network device to identify the UE.

Msg4: the network device transmits a contention resolution message to the UE. The UE determines whether the random access is successful based on Msg4.

Two-step random access (2-Step RACH) includes the following.

MSGA and MSGA are preamble transmissions on the random access resource, accompanied by a transmission of physical uplink shared channel (PUSCH) payload, equivalent to Msgl and Msg3 in 4-Step RACH.

MSGB and MSGB are random access response and contention resolution messages, equivalent to Msg2 and Msg4 in 4-Step RACH. Since MSGB includes a contention resolution message, a size of the MSGB must be different from that of Msg2.

As shown in FIG. 2, the UE in the idle state transmits an RRC connection setup request message to the network device in Msg3 of the 4-step random access or MSGA of the 2-step random access. After the Msg4 of the 4-step random access or the MSGB of the 2-step random access, the network device transmits an RRC connection setup (RRCSetup) message to the UE, and the UE responds with an RRC connection setup complete (RRCSetupComplete) message.

FIG. 3 is a schematic flowchart of an RRC connection resume procedure through 4-step random access and 2-step random access according to the related art. For details on the 4-step random access and 2-step random access procedures, reference is made to the description of FIG. 2 above.

As shown in FIG. 3, the UE in the inactive state transmits an RRC connection resume request (RRCResumeRequest) message to the network device in Msg3 of the 4-step random access or MSGA of the 2-step random access. After the Msg4 of the 4-step random access or the MSGB of the 2-step random access, the network device transmits an RRC connection resume (RRCResume) message to the UE, and the UE responds with an RRC connection resume complete (RRCResumeComplete) message.

Based on different scenarios, RRC signaling may vary. For example, the network device may respond to the RRC resume request message with an RRC connection complete message.

As shown in FIG. 2 and FIG. 3, in the related art, in case that a UE in an idle or inactive state needs to obtain clock quality information, it must enter the RRC connected state through the random access procedure and a RRC signaling procedure, before receiving the clock quality information. In case that a large number of UEs in the idle or inactive state need to obtain the clock quality information, signaling overhead and resulting radio interface resource overhead are significant, but the amount of clock quality information the UEs actually need to obtain is relatively small, for example, only a single bit of acceptable/not acceptable indication needs to be obtained.

In view of the problems in related art, embodiments of the present application provide methods and apparatuses for clock quality information reception and transmission and storage media. A user equipment in an idle or inactive state receives clock quality information transmitted from a network device during a random access procedure. This allows the UE to receive clock quality information without completing the entire signaling procedure for entering an RRC connected state, saving radio interface resource overhead and enabling the terminal to obtain clock quality information more quickly and efficiently.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may further include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, names of the terminal may be different. For example, in the 5G system, the terminal may be referred to as a user equipment (UE). A radio terminal can communicate with one or more core networks (CN) via a radio access network (RAN), and the radio terminal can be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the radio interface, or other names. Network device can be used to exchange received air frames with Internet Protocol (IP) packets, and act as a router between radio terminal and the rest of the access network, and the rest of the access network can include an Internet protocol (IP) communication network. The network device may also coordinate attribute management for an radio interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a Femto, a pico base station (Pico), etc., which are not limited in the embodiments of the present application. In some network structures, a network device may include a centralized unit (CU) node and a distributed unit (DU) node, and the centralized unit and the distributed unit may also be geographically separated.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

FIG. 4 is a schematic flowchart of a method for clock quality information reception according to an embodiment of the present application. As shown in FIG. 4, the method is performed by a user equipment in an idle or inactive state and includes at least the following steps:
step 401, determining that a clock synchronization status has changed, initiating a random access procedure to a network device; and
step 402, receiving clock quality information transmitted from the network device during the random access procedure.

In an embodiment, after receiving a broadcast message SIB9 (which carries a reference report ID) from the network device, the UE in the idle or inactive state determines that the clock synchronization status has changed, indicating that the UE in the idle or inactive state needs to obtain clock quality information, and the UE in the idle or inactive state initiates a random access procedure to the network device. That is, the random access procedure is triggered in case that the clock synchronization status has changed.

The UE in the idle or inactive state receives the clock quality information transmitted from the network device during the random access procedure.

In the method for clock quality information reception provided in embodiments of the present application, a user equipment in an idle or inactive state receives clock quality information transmitted from a network device during a random access procedure. This allows the UE to receive clock quality information without completing the entire signaling procedure for entering an RRC connected state, saving radio interface resource overhead and enabling the terminal to obtain clock quality information more quickly and efficiently.

In some embodiments, the clock quality information is a clock quality metric, or an acceptable/not acceptable indication; where the clock quality metric includes one or more of:
clock accuracy;
traceability to universal time coordinated (UTC) and to a global navigation satellite system (GNSS);
frequency stability;
a parent time source; or
a clock synchronization status.

In an embodiment, clock quality information mainly includes two categories: a clock quality metric and an acceptable/unacceptable indication.

If the clock quality information is a clock quality metric, it may be one or more of: clock accuracy, traceability to UTC or GNSS, frequency stability, a parent time source, or a clock synchronization status. For details, reference is made to Table 1. UTC stands for universal time coordinated. The clock quality metric generally contains a large amount of information.

If the clock quality information is an acceptable/not acceptable indication, it generally contains only one bit of useful information, which is very small, and the acceptable/not acceptable indication is specific to each UE.

For step 402, for receiving clock quality information transmitted from the network device during the random access procedure, there are several possible solutions.

Solution 1: the UE receives the clock quality information through a contention resolution message.

In some embodiments, receiving the clock quality information transmitted from the network device in step 402 includes receiving a contention resolution message transmitted from the network device, where the contention resolution message carries the clock quality information.

In an embodiment, the UE in the idle or inactive state receives clock quality information through a contention resolution message transmitted from a network device. The contention resolution message is Msg3 in 4-step random access and MSGB in 2-step random access.

In some embodiments, the clock quality information carried in the contention resolution message is an acceptable/not acceptable indication.

In an embodiment, since the contention resolution message is a media access control (MAC) layer message and cannot contain a lot of information, the clock quality information carried in the contention resolution message can be a specific type of clock quality information, such as an acceptable/not acceptable indication.

In some embodiments, the clock quality information is indicated by at least one of:
a first indicator field in a downlink MAC control element (CE) transmitting the contention resolution message; or
a second indicator field in a MAC subheader corresponding to a downlink MAC CE transmitting the contention resolution message.

In an embodiment, in case that the contention resolution message carries the clock quality information, the clock quality information may be indicated using different indicator fields: the first indicator field in the MAC CE transmitting the contention resolution message; or the second indicator field in the MAC subheader corresponding to the MAC CE transmitting the contention resolution message. In actual use, only one of the two may be used.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In an embodiment, the MAC protocol data unit (PDU) in the contention resolution message carrying clock quality information may have different formats.

For example, based on the traditional UE contention resolution identity MAC CE, a clock quality information field of 1 to 2 bytes or longer is introduced. This clock quality information field may carry any type of clock quality information, and the type of clock quality information is indicated to the base station by the core network.

For example, contention resolution may be performed using a MAC CE carrying clock quality information, that is, the UE contention resolution identity and the clock quality information are transmitted in a single MAC CE. For 4-step random access, the physical downlink control channel (PDCCH) scrambled with the cell radio network temporary identity (C-RNTI) carried in the random access response (Msg2) is parsed. Msg4 is retrieved based on the scheduling information of the PDCCH to complete contention resolution. UE contention resolution identity and MAC CE carrying the clock quality information are transmitted in Msg4. For 2-step random access, the PDCCH scrambled with MSGB-RNTI is parsed. The MSGB is retrieved based on the scheduling information of the PDCCH. UE contention resolution identity and MAC CE carrying the clock quality information are transmitted in the MSGB.

For another example, a reserved bit (the second indicator field) in the MAC subheader is used to indicate clock quality information. This MAC subheader and the UE contention resolution identity MAC CE are transmitted in the same MAC PDU. This solution is suitable for scenarios where the amount of clock quality information is small (for example, an acceptable/not acceptable indication).

Solution 2: the UE receives the clock quality information through a downlink radio resource control (RRC) message.

In some embodiments, receiving the clock quality information transmitted from the network device in step 402 includes receiving a downlink RRC message transmitted from the network device, where the downlink RRC message carries the clock quality information.

In an embodiment, the UE in the idle or inactive state receives the clock quality information through the downlink RRC message transmitted from the network device. The downlink RRC messages include, for example, an RRC connection release message and an RRC connection reject message.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In an embodiment, the downlink RRC message carrying the clock quality information may be a downlink information transfer message (DLInformationTransfer), an RRC connection release message (RRCRelease), or an RRC reject message (RRCReject). This applies equally to the UEs in the idle and inactive state. The RRC reject message may be an RRC connection setup reject message (for UE in the idle state) or an RRC connection resume reject message (for UE in the inactive state).

Solution 3: the UE receives the clock quality information through a random access response. The random access response is a response message to a dedicated random access request, and the dedicated random access request is transmitted based on a dedicated random access resource and/or a dedicated random access preamble.

In some embodiments, the method for clock quality information reception according to an embodiment of the present application further includes:
transmitting a random access request message to the network device based a dedicated random access resource and/or a dedicated random access preamble configured by the network device; where the dedicated random access resource and/or the dedicated random access preamble are dedicated to at least one UE or UE group receiving same clock quality information, or to at least one UE or UE group receiving a same category of clock quality information, or to at least one UE or UE group that retrieves clock quality information;
receiving the clock quality information transmitted from the network device in step 402 includes receiving a random access response message transmitted from the network device, where the random access response message carries the clock quality information.

In an embodiment, a dedicated random access resource and/or a dedicated random access preamble are preconfigured for UEs that need to receive clock quality information. The dedicated random access resource is a non-contention random access resource, and the dedicated random access preamble is a non-contention random access preamble (e.g., dedicated random access preamble).

The configuration of the dedicated random access resource and the dedicated random access preamble may be used to group UEs based on clock quality information. The same set of dedicated random access resource and/or dedicated random access preamble are assigned to at least one UE or UE group that needs to receive the same clock quality information.

Alternatively, the same set of dedicated random access resource and/or dedicated random access preamble are assigned to at least one UE or UE group that needs to receive a same type of clock quality information. For example, a set of dedicated random access resources is assigned to a UEs that receive an acceptable/not acceptable indication. For example, a set of dedicated random access preambles is assigned to a UEs that receive a clock quality metric. Furthermore, further grouping may be performed based on the content of the clock quality metric.

Alternatively, only one dedicated random access resource and/or dedicated random access preamble is assigned for clock quality information.

In case that a UE needs to receive clock quality information, the UE transmits a random access request using the dedicated random access resource, or transmits a dedicated random access preamble in Msg1 or MSGA. In this solution, the UE transmits a dedicated random access request to the network device based on the dedicated random access resource and/or random access preamble, implicitly transmitting a retrieve clock quality information request to the network device.

In some embodiments, the clock quality information carried in the random access response message is an acceptable/not acceptable indication.

In an embodiment, since the random access response message is a MAC layer message and cannot contain a lot of information, the clock quality information carried in the random access response message may be a specific type of clock quality information, such as an acceptable/not acceptable indication.

In the method for clock quality information reception provided in embodiments of the present application, a user equipment in an idle or inactive state receives clock quality information through a UE contention resolution message, a downlink RRC message, or a random access response message in response to a dedicated random access request. During a random access procedure, the UE receives clock quality information without entering an RRC connected state, saving radio interface resource overhead and enabling the terminal to obtain clock quality information more quickly and efficiently.

In some embodiments, the method for clock quality information reception according to an embodiment of the present application further includes: transmitting a retrieve clock quality information request to the network device.

In an embodiment, before receiving the clock quality information, the UE may explicitly transmit the retrieve clock quality information request to the network device.

During the random access procedure, there are multiple ways to explicitly transmit the retrieve clock quality information request to the network device.

Solution 1: the UE transmits the retrieve clock quality information request through an uplink RRC message.

In some embodiments, transmitting the retrieve clock quality information request to the network device includes: transmitting an uplink radio resource control (RRC) message to the network device, where the uplink RRC message carries the retrieve clock quality information request; where for a UE in idle state, the uplink RRC message is an RRC connection setup request message; and for a UE in the inactive state, the uplink RRC message is an RRC connection resume request message.

In an embodiment, a UE in an idle state transmits the retrieve clock quality information request to the network device through an RRC connection setup request message, and a UE in an inactive state transmits the retrieve clock quality information request to the network device through an RRC connection resume request message.

In some embodiments, a connection establishment cause in the RRC connection setup request message includes the retrieve clock quality information request, or a connection resume cause in the RRC connection resume request message includes the retrieve clock quality information request, or the uplink RRC message includes an information element of the retrieve clock quality information request.

In an embodiment, the retrieve clock quality information request may be carried in the following manners.

For a UE in an idle state, a cause value "retrieve clock quality information request" may be added to a connection establishment cause (establishmentCause) carried in the RRC connection setup request message. In one possible implementation, the connection establishment cause is "retrieve clock quality information request" and no other causes are included.

For a UE in an inactive state, a cause value "retrieve clock quality information request" may be added to a connection resume cause (ResumeCause) carried in the RRC connection resume request message. In one possible implementation, the connection resume cause is "retrieve clock quality information request" and no other causes are included.

For a UE in an idle state, a separate information element (IE) "retrieve clock quality information request" may be added to the RRC connection setup request message. For a UE in an inactive state, a separate IE "retrieve clock quality information request" may be added to the RRC connection resume request message.

Solution 2: the UE transmits the retrieve clock quality information request through an uplink MAC CE.

In some embodiments, transmitting the retrieve clock quality information request to the network device includes: transmitting an uplink media access control (MAC) control element (CE) to the network device, where the uplink MAC CE carries the retrieve clock quality information request; and the uplink MAC CE is transmitted through Msg3 of a 4-step random access procedure or MSGA of a 2-step random access procedure.

In an embodiment, a scrambled MAC CE is transmitted in Msg3 of a 4-step random access procedure or MSGA of a 2-step random access procedure. The UE may use this MAC CE to transmit the retrieve clock quality information request to the network device.

In some embodiments, this MAC CE further carries UE identity information to facilitate the network device to identify a UE.

In the method for clock quality information reception provided in embodiments of the present application, a user equipment in an idle or inactive state transmits a retrieve clock quality information request to a network device during a random access procedure to retrieve clock quality information request transmitted from the network device during the random access procedure. This allows the UE to receive the clock quality information without entering an RRC connected state, saving radio interface resource overhead and enabling the terminal to obtain clock quality information more quickly and efficiently.

In some embodiments, after receiving the clock quality information transmitted from the network device in step 402, the method for clock quality information reception according to an embodiment of the present application further includes: entering an idle or inactive state.

In an embodiment, after receiving the clock quality information, the UE may enter an idle or inactive state to save resources. If the UE returns to the inactive state, all other context except the clock quality information may remain unchanged.

It should be noted that in the aforementioned embodiments performed by the UE in the idle or inactive state, the solutions for UE to receive the clock quality information and transmit the retrieve clock quality information request may be combined.

FIG. 5 is a schematic flowchart of a method for clock quality information transmission according to an embodiment of the present application. As shown in FIG. 5, the method is performed by a network device, such as a 5G base station. The method includes at least the following step:
step 501, transmitting clock quality information to a user equipment (UE) during a random access procedure; where the UE is in an idle or inactive state, and the random access procedure is triggered in case that a clock synchronization status has changed.

In an embodiment, the network device determines that the clock synchronization status has changed and transmits a broadcast message SIB9 to a UE in an idle or inactive state. The SIB9 carries a reference report identity, the UE in the idle or inactive state is triggered to initiate a random access procedure. During this random access procedure, the network device transmits clock quality information to the UE in the idle or inactive state.

In a method for clock quality information transmission provided in embodiment of the present application, a network device transmits clock quality information to a user equipment in an idle or inactive state during a random access procedure. This allows the network device to transmit the clock quality information without the UE completing the entire signaling procedure for entering an RRC connected state, saving radio interface resource overhead and enabling the terminal to obtain clock quality information more quickly and efficiently.

In some embodiments, the clock quality information is a clock quality metric, or an acceptable/not acceptable indication; where the clock quality metric includes one or more of:
clock accuracy;
traceability to universal time coordinated (UTC) and to global navigation satellite system (GNSS);
frequency stability;
a parent time source; or
a clock synchronization status.

In an embodiment, clock quality information mainly includes two categories: a clock quality metric and an acceptable/unacceptable indication.

If the clock quality information is a clock quality metric, it may be one or more of: clock accuracy, traceability to UTC or GNSS, frequency stability, parent time source, or a clock synchronization status. For details, reference is made to Table 1. The clock quality metric generally contains a large amount of information.

If the clock quality information is an acceptable/not acceptable indication, it generally contains only one bit of useful information, which is very small, and the acceptable/not acceptable indication is specific to each UE.

There are several possible solutions for step 501 of transmitting clock quality information to a user equipment (UE) during a random access procedure.

Solution 1: the network device transmits the clock quality information to the UE through a contention resolution message.

In some embodiments, transmitting the clock quality information to the UE in step 501 includes:
transmitting a contention resolution message to the UE, where the contention resolution message carries the clock quality information.

In an embodiment, the network device transmits the clock quality information to the UE in an idle or inactive state through a contention resolution message. The contention resolution message is Msg3 in 4-step random access and MSGB in 2-step random access.

In some embodiments, the clock quality information carried in the contention resolution message is an acceptable/not acceptable indication. In an embodiment, since the contention resolution message is a media access control (MAC) layer message and cannot contain a lot of information, the clock quality information carried in the contention resolution message may be a specific type of clock quality information, such as an acceptable/not acceptable indication.

In some embodiments, the clock quality information is indicated by at least one of:
a first indicator field in the downlink MAC control element (CE) transmitting the contention resolution message; or
a second indicator field in the MAC subheader corresponding to the downlink MAC CE transmitting the contention resolution message.

In an embodiment, in case that the clock quality information is transmitted in the contention resolution message, the clock quality information may be indicated using different indicator fields: the first indicator field in the MAC CE transmitting the contention resolution message; or the second indicator field in the MAC subheader corresponding to the MAC CE transmitting the contention resolution message. In actual use, only one of the two may be used.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In an embodiment, the MAC protocol data unit (PDU) in the contention resolution message carrying clock quality information may have different formats.

For example, based on the traditional UE contention resolution identity MAC CE, a clock quality information field of 1 to 2 bytes or longer is introduced. This clock quality information field may carry any type of clock quality information, and the type of clock quality information is indicated to the base station by the core network.

For example, contention resolution may be performed using a MAC CE carrying clock quality information, that is, the UE contention resolution identity and the clock quality information are transmitted in a single MAC CE. For 4-step random access, the PDCCH scrambled with cell radio network temporary identity (C-RNTI) carried in the random access response (Msg2) is parsed. The Msg4 is retrieved based on the scheduling information of the PDCCH to complete contention resolution. UE contention resolution identity and MAC CE carrying the clock quality information are transmitted in the MSGB. For 2-step random access, the PDCCH scrambled with MSGB-RNTI is parsed. The MSGB is retrieved based on the scheduling information of the PDCCH. UE contention resolution identity and MAC CE carrying the clock quality information are transmitted in the MSGB.

For another example, a reserved bit (the second indicator field) in the MAC subheader is used to indicate clock quality information. This MAC subheader and the UE contention resolution identity MAC CE are transmitted in the same MAC PDU. This solution is suitable for scenarios where the amount of clock quality information is small (for example, an acceptable/not acceptable indication).

Solution 2: the network device transmits the clock quality information through a downlink radio resource control (RRC) message.

In some embodiments, transmitting the clock quality information to the UE in step 501 includes:
transmitting a downlink RRC message to the UE, where the downlink RRC message carries the clock quality information.

In an embodiment, the network device transmits the clock quality information to the UE in an idle or inactive state through the downlink RRC message. The downlink RRC messages include, for example, an RRC connection release message and an RRC connection reject message.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In an embodiment, the downlink RRC message carrying the clock quality information may be a downlink information transfer message, an RRC connection release message, or an RRC reject message. This applies equally to the UEs in the idle and inactive state. The RRC reject message may be an RRC connection setup reject message (for UE in the idle state) or an RRC connection resume reject message (for UE in the inactive state).

Solution 3: the network device configures a dedicated random access resource and/or a dedicated random access preamble for clock quality information. After receiving a random access request message transmitted from a UE based on the dedicated random access resource and/or dedicated random access preamble, the network device transmits the clock quality information in a random access response.

In some embodiments, the method for clock quality information transmission according to the disclosed embodiments further includes: configuring a dedicated random access resource and/or a dedicated random access preamble for at least one UE or UE group receiving same clock quality information, or at least one UE or UE group receiving a same category of clock quality information, or at least one UE or UE group that retrieves clock quality information; and indicating a configured dedicated random access resource and/or dedicated random access preamble to the UE; transmitting the clock quality information to UE in step 501 includes transmitting response message to the UE in response to a random access request message transmitted from UE based on the configured dedicated random access resource and/or dedicated random access preamble, where the random access response message carries the clock quality information.

In an embodiment, the network device pre-configures a dedicated random access resource and/or a dedicated random access preamble for UEs that need to receive clock quality information. The dedicated random access resource is a non-contention random access resource, and the dedicated random access preamble is a non-contention random access preamble (e.g., dedicated random access preamble).

The configuration of the dedicated random access resource and the dedicated random access preamble may be used to group UEs based on clock quality information. The network device assigns a same set of dedicated random access resource and/or dedicated random access preamble to at least one UE or UE group that needs to receive the same clock quality information.

Alternatively, the network device assigns the same set of dedicated random access resource and/or dedicated random access preamble to at least one UE or UE group that needs to receive a same type of clock quality information. For example, a set of dedicated random access resources are assigned to a UEs that receive an acceptable/not acceptable indication. For example, a set of dedicated random access preambles is assigned to a UEs that receive a clock quality metric. Furthermore, further grouping may be performed based on the content of the clock quality metric.

Alternatively, the network device assigns only one dedicated random access resource and/or dedicated random access preamble for clock quality information.

The network device configures a dedicated random access resource and/or a dedicated random access preamble for a UE. After the network device receives a dedicated random access request message transmitted from a UE based on the dedicated random access resource and/or random access preamble, it indicates that the network device needs to transmit the clock quality information to the UE.

In some embodiments, the clock quality information carried in the random access response message is an acceptable/not acceptable indication.

In an embodiment, since the random access response message is a MAC layer message and cannot contain a lot of information, the clock quality information carried in the random access response message may be a specific type of clock quality information, such as an acceptable/not acceptable indication.

In the method for clock quality information transmission provided in embodiments of the present application, a network device transmits clock quality information to a user equipment in an idle or inactive state through a UE contention resolution message, a downlink RRC message, or a random access response message in response to a dedicated random access request. During a random access procedure, the UE receives clock quality information without entering an RRC connected state, saving radio interface resource overhead and enabling the terminal to obtain clock quality information more quickly and efficiently.

In some embodiments, the method for clock quality information transmission according to an embodiment of the present application further includes:
receiving a retrieve clock quality information request transmitted from the UE.

In an embodiment, before transmitting the clock quality information to the UE in the idle or inactive state, the network device may further receive a retrieve clock quality information request transmitted from the UE.

There are various solutions for the network device to receive the retrieve clock quality information request transmitted from the UE.

Solution 1: the network device receives the retrieve clock quality information request through an uplink RRC message.

In some embodiments, receiving the retrieve clock quality information request transmitted from the UE includes: receiving an uplink radio resource control (RRC) message transmitted from the UE, where the uplink RRC message carries the retrieve clock quality information request; where for a UE in idle state, the uplink RRC message is an RRC connection setup request message; and for a UE in the inactive state, the uplink RRC message is an RRC connection resume request message.

In an embodiment, the network device receives the retrieve clock quality information request transmitted from a UE in an idle state through an RRC connection setup request message, and receives the retrieve clock quality information request transmitted from a UE in an inactive state through an RRC connection resume request message.

In some embodiments, a connection establishment cause in the RRC connection setup request message includes the retrieve clock quality information request, or a connection resume cause in the RRC connection resume request message includes the retrieve clock quality information request, or the uplink RRC message includes an information element of the retrieve clock quality information request.

In an embodiment, the retrieve clock quality information request may be carried in the following manners.

For a UE in an idle state, a cause value "retrieve clock quality information request" may be added to a connection establishment cause (establishmentCause) carried in the RRC connection setup request message. In one possible implementation, the connection establishment cause is "retrieve clock quality information request" and no other causes are included.

For a UE in an inactive state, a cause value "retrieve clock quality information request" may be added to a connection resume cause (ResumeCause) carried in the RRC connection resume request message. In one possible implementation, the connection resume cause is "retrieve clock quality information request" and no other causes are included.

For a UE in an idle state, a separate information element (IE) "retrieve clock quality information request" may be added to the RRC connection setup request message. For a UE in an inactive state, a separate IE "retrieve clock quality information request" may be added to the RRC connection resume request message.

Solution 2: the network device receives the retrieve clock quality information request through an uplink MAC CE.

In some embodiments, receiving the retrieve clock quality information request transmitted from the UE includes: receiving an uplink media access control (MAC) control element (CE) transmitted from the UE, wherein the uplink MAC CE carries the retrieve clock quality information request; and the uplink MAC CE is transmitted through Msg3 of a 4-step random access procedure or MSGA of a 2-step random access procedure.

In an embodiment, a scrambled MAC CE is transmitted in Msg3 of a 4-step random access or MSGA of a 2-step random access. The network device may receive the retrieve clock quality information request transmitted from the UE through the MAC CE.

In some embodiments, this MAC CE further carries UE identity information to facilitate the network device to identify a UE.

In the method for clock quality information transmission provided in embodiments of the present application, a network device receives a retrieve clock quality information request transmitted from a UE in an idle or inactive state during a random access procedure. During a random access procedure, the UE can receive clock quality information without entering an RRC connected state, saving radio interface resource overhead and enabling the terminal to obtain clock quality information more quickly and efficiently.

It should be noted that in the aforementioned embodiments performed by the network device, the solutions for the network device to transmit the clock quality information and receive the retrieve clock quality information request may be combined.

The solutions of the embodiments of the present application are further introduced below through several specific examples.

Example 1: a user equipment (UE) carries a "retrieve clock quality information request" in an RRC connection setup request message or an RRC connection resume request message, and a base station transmits clock quality information to the UE in a contention resolution message.

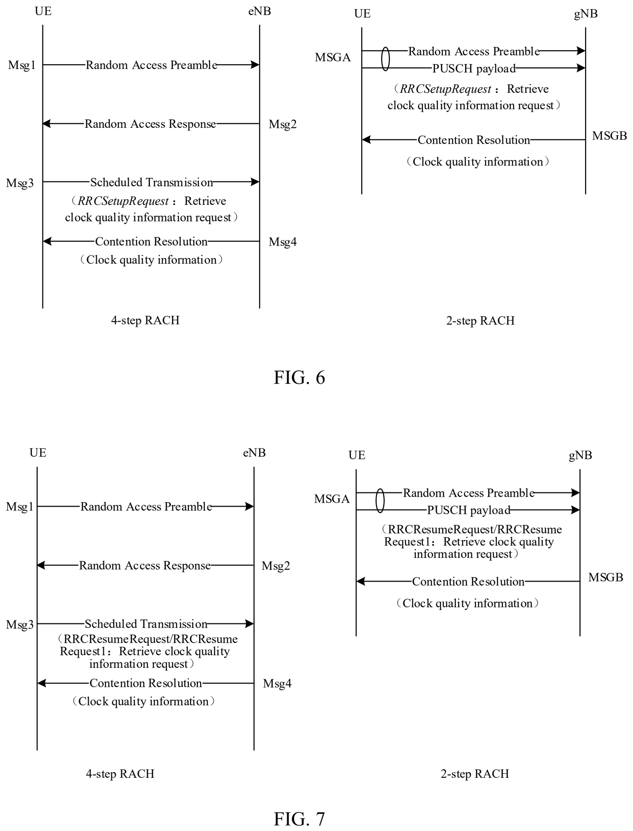

FIG. 6 is a first schematic flowchart of a method for clock quality information reception performed by a user equipment in an idle state according to an embodiment of the present application. FIG. 7 is a first schematic flowchart of a method for clock quality information reception performed by a user equipment in an inactive state according to an embodiment of the present application. As shown in FIG. 6 and FIG. 7, for a UE in an idle or inactive state,
at step1, the UE receives SIB9 broadcast message from a base station and determines that it needs to receive clock quality information based on a reference report identity;
at step 2, the UE transmits a random access request to the base station;
at step 3, the UE receives a random access response transmitted from the base station, where the random access response includes uplink resource allocation;
at step 4, the UE transmits an uplink radio resource control (RRC) message on an uplink resource allocated in the random access response; a UE in an idle state transmits a RRC connection setup request messages, and a UE in an inactive state transmits a RRC connection resume request message; this uplink RRC message carries a "retrieve clock quality information request", and the "retrieve clock quality information request" is used as a new cause value in a connection establishment cause or a connection resume cause, or is indicated through a separate IE; and
at step 5, the UE receives a contention resolution message transmitted from the base station, where the contention resolution message carries clock quality information.

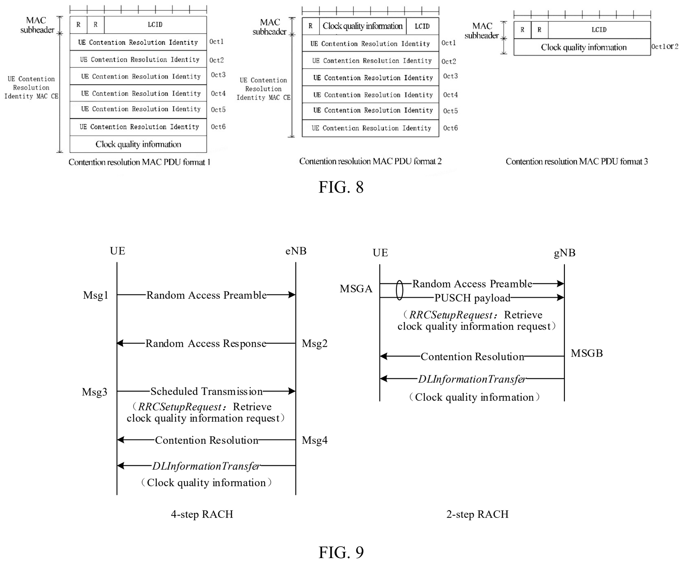

FIG. 8 is a schematic diagram is diagram of three types of media access control (MAC) protocol data unit (PDU) formats in a contention resolution message carrying clock quality information according to an embodiment of the present application. As shown in FIG. 8, LCID represents a Locale Identifier, R represents a reserved bit, and Oct represents a flag byte.

Format 1, based on the traditional UE contention resolution identity MAC CE, a clock quality information field of 1 to 2 bytes or longer is introduced. This clock quality information field may carry any one type of clock quality information, and the type of clock quality information is notified to base station by the core network.

Format 2: a reserved bit in the MAC subheader is used to indicate clock quality information. This format is only applicable in case that the clock quality information is the type of acceptable/not acceptable indication.

Format 3: contention resolution is performed using a MAC CE with clock indication information (in an embodiment, it can be 1 to 2 bytes or longer). After the UE transmits a "retrieve clock quality information request" message in the uplink transmission of Msg3 or MSGA, for 4-step random access, the PDCCH scrambled with cell radio network temporary identity (C-RNTI) carried in the random access response (Msg2) is parsed. The Msg4 is retrieved based on the scheduling information of a physical downlink control channel (PDCCH) to complete contention resolution. A MAC PDU carrying the clock quality information indicated by a format 3 is transmitted in the Msg4. For 2-step random access, the PDCCH scrambled with MSGB-RNTI is parsed and the MSGB is retrieved based on the scheduling information of the PDCCH. A MAC PDU carrying the clock quality information indicated by a format 3 is transmitted in the MSGB.

In actual use, only one of the three formats above may be used. Alternatively, after receiving the clock quality information, the UE may return an idle or inactive state. For 2-step random access, steps 2 and 4 are transmitted together, i.e., MSGA, without step 3.

For the base station:
at step 1, the base station determines the clock information has changed and notifies in the broadcast message SIB9;
at step 2, the base station receives a random access request transmitted from a UE;
at step 3, the base station transmits a random access response to the UE;
at step 4, the base station receives an RRC connection setup request or RRC connection resume request carrying a "retrieve clock quality information request" transmitted from the UE; and
at step 5, the base station transmits a contention resolution message to the UE, where the contention resolution message carries the clock quality information.

For 2-step random access, steps 2 and 4 are received together, i.e., MSGA, without step 3.

Example 2: a user equipment (UE) carries a "retrieve clock quality information request" in an RRC connection setup request message or an RRC connection resume request message, and a base station responds to the UE with a downlink information transfer message (DLInformationTransfer) carrying clock quality information.

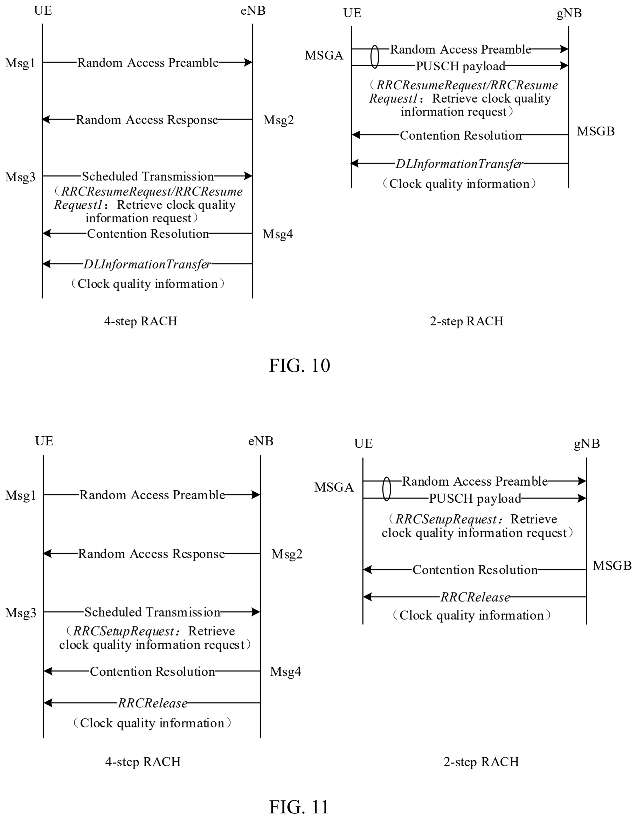

FIG. 9 is a second schematic flowchart of a method for clock quality information reception performed by a user equipment in an idle state according to an embodiment of the present application. FIG. 10 is a second schematic flowchart of a method for clock quality information reception performed by a user equipment in an inactive state according to an embodiment of the present application. As shown in FIG. 9 and FIG. 10, for a UE in an idle or inactive state,
at step1, the UE receives SIB9 broadcast message from a base station and determines that it needs to receive clock quality information based on a reference report identity;
at step 2, the UE transmits a random access request to the base station;
at step 3, the UE receives a random access response transmitted from the base station, where the random access response includes uplink resource allocation;
at step 4, the UE transmits an uplink radio resource control (RRC) message on an uplink resource allocated in the random access response; a UE in an idle state transmits a RRC connection setup request messages, and a UE in an inactive state transmits a RRC connection resume request message; this uplink RRC message carries a "retrieve clock quality information request", and the "retrieve clock quality information request" is used as a new cause value in a connection establishment cause or a connection resume cause, or is indicated through a separate IE;
at step 5, the UE receives a contention resolution message transmitted from the base station; and
at step 6, the UE receives clock quality information transmitted from the base station through a downlink information transfer message; alternatively, after receiving the clock quality information, the UE returns an idle or inactive state.

It should be noted that for 2-step random access, steps 2 and 4 are transmitted together, i.e., MSGA, without step 3.

For the base station:
at step 1, the base station determines the clock information has changed and notifies in the broadcast message SIB9;
at step 2, the base station receives a random access request transmitted from a UE;
at step 3, the base station transmits a random access response to the UE;
at step 4, the base station receives an RRC connection setup request or RRC connection resume request carrying a "retrieve clock quality information request" transmitted from the UE;
at step 5, the base station transmits a contention resolution message to the UE, where the contention resolution message carries the clock quality information; and
at step 6: the base station transmits a downlink information transfer message carrying the clock quality information to the UE.

For 2-step random access, steps 2 and 4 are received together, i.e., MSGA, without step 3.

Example 3: a user equipment (UE) carries a "retrieve clock quality information request" in an RRC connection setup request message or an RRC connection resume request message, and a base station responds to the UE with an RRC connection release message (RRCRelease) carrying clock quality information.

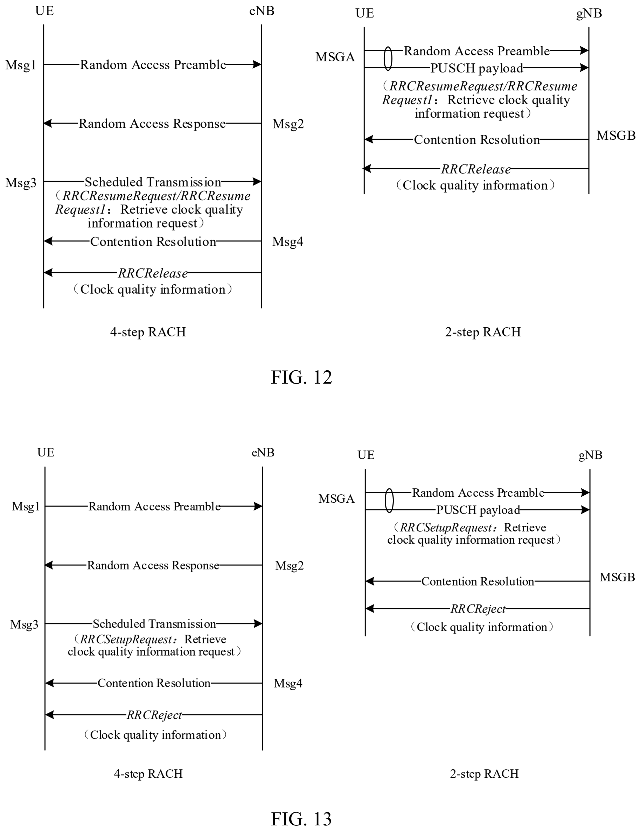

FIG. 11 is a third schematic flowchart of a method for clock quality information reception performed by a user equipment in an idle state according to an embodiment of the present application. FIG. 12 is a third schematic flowchart of a method for clock quality information reception performed by a user equipment in an inactive state according to an embodiment of the present application. As shown in FIG. 11 and FIG. 12, for a UE in an idle or inactive state,
at step1, the UE receives SIB9 broadcast message from a base station and determines that it needs to receive clock quality information based on a reference report identity;
at step 2, the UE transmits a random access request to the base station;
at step 3, the UE receives a random access response transmitted from the base station, where the random access response includes uplink resource allocation;
at step 4, the UE transmits an uplink radio resource control (RRC) message on an uplink resource allocated in the random access response; a UE in an idle state transmits a RRC connection setup request messages, and a UE in an inactive state transmits a RRC connection resume request message; this uplink RRC message carries a "retrieve clock quality information request", and the "retrieve clock quality information request" is used as a new cause value in a connection establishment cause or a connection resume cause, or is indicated through a separate IE;
at step 5, the UE receives a contention resolution message transmitted from the base station; and
at step 6, the UE receives clock quality information transmitted from the base station through an RRC connection release message; alternatively, after receiving the clock quality information, the UE returns an idle or inactive state.

It should be noted that for 2-step random access, steps 2 and 4 are transmitted together, i.e., MSGA, without step 3.

For the base station:
at step 1, the base station determines the clock information has changed and notifies in the broadcast message SIB9;
at step 2, the base station receives a random access request transmitted from a UE;
at step 3, the base station transmits a random access response to the UE;
at step 4, the base station receives an RRC connection setup request or RRC connection resume request carrying a "retrieve clock quality information request" transmitted from the UE;
at step 5, the base station transmits a contention resolution message to the UE, where the contention resolution message carries the clock quality information; and
at step 6: the base station transmits an RRC connection release message carrying the clock quality information to the UE.

For 2-step random access, steps 2 and 4 are received together, i.e., MSGA, without step 3.

Example 4: a user equipment (UE) carries a "retrieve clock quality information request" in an RRC connection setup request message or an RRC connection resume request message, and a base station responds to the UE with an RRC connection reject message (RRCReject) carrying clock quality information.

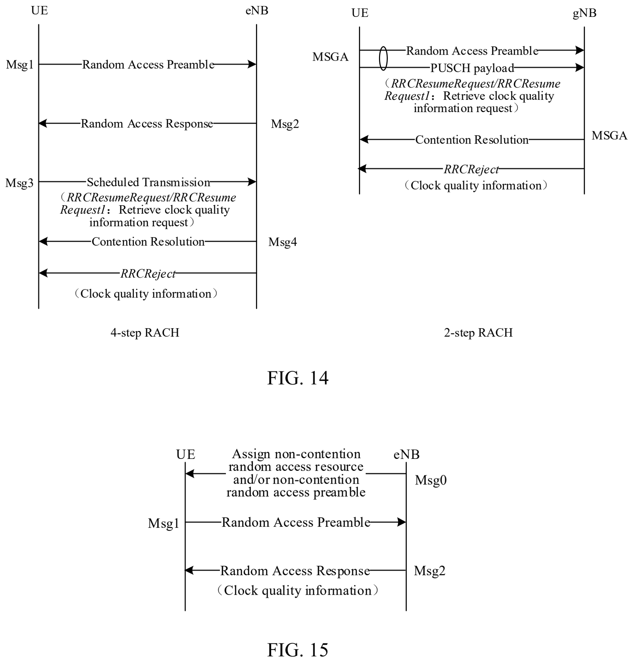

FIG. 13 is a fourth schematic flowchart of a method for clock quality information reception performed by a user equipment in an idle state according to an embodiment of the present application. FIG. 14 is a fourth schematic flowchart of a method for clock quality information reception performed by a user equipment in an inactive state according to an embodiment of the present application. As shown in FIG. 13 and FIG. 14, for a UE in an idle or inactive state,
at step1, the UE receives SIB9 broadcast message from a base station and determines that it needs to receive clock quality information based on a reference report identity;
at step 2, the UE transmits a random access request to the base station;
at step 3, the UE receives a random access response transmitted from the base station, where the random access response includes uplink resource allocation;
at step 4, the UE transmits an uplink radio resource control (RRC) message on an uplink resource allocated in the random access response; a UE in an idle state transmits a RRC connection setup request messages, and a UE in an inactive state transmits a RRC connection resume request message; this uplink RRC message carries a "retrieve clock quality information request", and the "retrieve clock quality information request" is used as a new cause value in a connection establishment cause or a connection resume cause, or is indicated through a separate IE;
at step 5, the UE receives a contention resolution message transmitted from the base station; and
at step 6, the UE receives clock quality information transmitted from the base station through an RRC reject message; alternatively, after receiving the clock quality information, the UE returns an idle or inactive state.

It should be noted that for 2-step random access, steps 2 and 4 are transmitted together, i.e., MSGA, without step 3.

For the base station,
at step 1, the base station determines the clock information has changed and notifies in the broadcast message SIB9;
at step 2, the base station receives a random access request transmitted from a UE;
at step 3, the base station transmits a random access response to the UE;
at step 4, the base station receives an RRC connection setup request or RRC connection resume request carrying a "retrieve clock quality information request" transmitted from the UE;
at step 5, the base station transmits a contention resolution message to the UE, where the contention resolution message carries the clock quality information; and
at step 6: the base station transmits an RRC reject message carrying the clock quality information to the UE.

For 2-step random access, steps 2 and 4 are received together, i.e., MSGA, without step 3.

Example 5: a dedicated random access resource and/or dedicated random access preamble are assigned to a UE receiving clock quality information. In case that the UE needs to receive clock quality information, the UE initiates a dedicated random access request based on the dedicated random access resources and/or dedicated random access preamble. After receiving the dedicated random access request, the base station transmits the clock quality information to the corresponding UE in a random access response.

FIG. 15 is a first schematic flowchart of a method for clock quality information reception and transmission according to an embodiment of the present application. As shown in FIG. 15, for a UE in an idle or inactive state,
at step 1, the UE receive a system message transmitted from a base station, this system message configures a dedicated random access resource (non-contention random access resource) and/or a dedicated random access preamble (non-contention random access preamble) for retrieving clock quality information;
at step 2, the UE receives SIB9 broadcast message from a base station and determines that it needs to receive clock quality information based on a reference report identity;
at step 3, the UE transmits a random access request using the dedicated random access resource, or transmits a dedicated random access preamble based on the configuration at step 1; and
at step 4, the UE receives a random access response transmitted from the base station, where the random access response carries clock quality information.

For the base station:
at step1, the base station assigns a set of dedicated random access resources for each type of clock quality information based on types of clock quality information and broadcasts the dedicated random access resources in a system message; alternatively, the base station may assign only one dedicated random access resource for each type of clock quality information;
at step 2, the base station determines the clock information has changed and notifies in the broadcast message SIB9;
at step 3, the base station receives a random access request, transmitted from the UE, on the dedicated random access resource; and
at step 4, the base station transmits a random access response to the UE, where the random access response carries clock quality information.

Example 6: during the uplink transmission of Msg3 (4-step random access) or MSGA (2-step random access), the UE uses a MAC CE to carry a "retrieve clock quality information request"; the network responds to the UE by carrying the clock quality information in Msg4 (4-step random access) or MSGB (2-step random access).

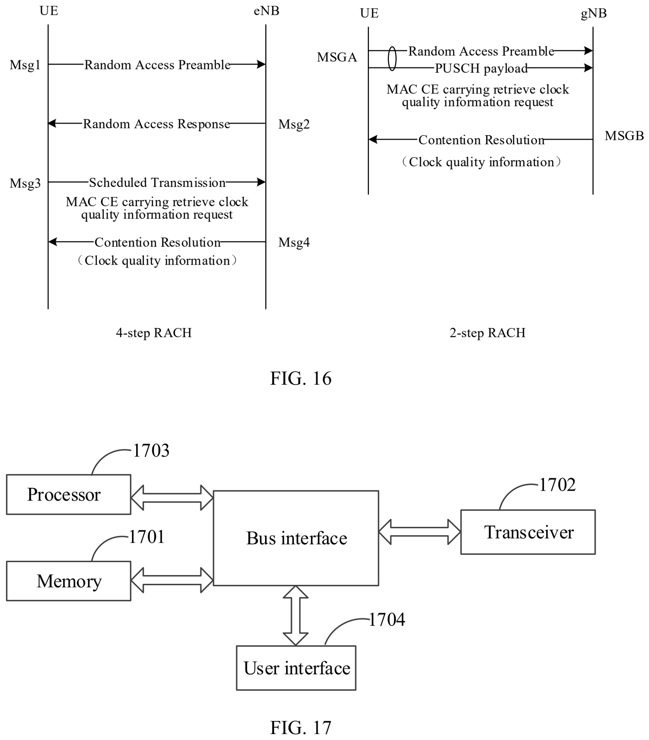

FIG. 16 is a second schematic flowchart of a method for clock quality information reception and transmission according to an embodiment of the present application. As shown in FIG. 16, for a UE in an idle or inactive state,
at step1, the UE receives SIB9 broadcast message from a base station and determines that it needs to receive clock quality information based on a reference report identity;
at step 2, the UE transmits a random access request to the base station;
at step 3, the UE receives a random access response transmitted from the base station, the random access response includes uplink resource allocation;
at step 4, the UE transmits an uplink MAC CE on an uplink resource allocated in the random access response, where the MAC CE carries a "retrieve clock quality information request"; alternatively, this MAC CE further carries a UE identity; and
at step 5, the UE receives clock quality information transmitted from the base station; this clock quality information may be used for contention resolution; and this clock quality information may be transmitted in any of the following ways:
   (1) being carried by a MAC layer signaling, such as in any of the formats shown in FIG. 8;
   (2) being carried by a downlink information transfer message; or
   (3) being carried by an RRC release message.

Alternatively, after receiving the message, the UE returns an idle or inactive state. For 2-step random access, steps 2 and 4 are transmitted together, i.e., MSGA, without step 3.

For the base station:
at step 1, the base station determines the clock information has changed and notifies in the broadcast message SIB9;
at step 2, the base station receives a random access request transmitted from a UE;
at step 3, the base station transmits a random access response to the UE;
at step 4, the base station receives a MAC layer message carrying a "retrieve clock quality information request"; alternatively, this MAC layer message further carries a UE identity; and
at step 5: the base station transmits clock quality information to the UE, which is used to complete contention resolution.

It should be noted that for 2-step random access, steps 2 and 4 are received together, i.e., MSGA, without step 3.

FIG. 17 is a schematic structural diagram of a terminal according to an embodiment of the present application. As shown in FIG. 17, the terminal includes a memory 1701, a transceiver 1702, and a processor 1703. The memory 1701 is used for storing a computer program; and the transceiver 1702 is used for transmitting and receiving data under control of the processor 1703.

In an embodiment, the transceiver 1702 is used to receive and send data under the control of the processor 1703.

In FIG. 17, a bus architecture may include any number of interconnected buses and bridges, which are linked together through various circuits of one or more processors represented by the processor 1703 and one or more memories represented by the memory 1701. The bus architecture can also link together various other circuits, such as peripherals, voltage regulators, and power management circuits, which are well known in the art, and therefore will not be further described in the present application. The bus interface provides an interface. The transceiver 1702 may be multiple elements, i.e., including a transmitter and a receiver, units for providing communication with various other devices over transmission media including wireless channels, wired channels, fiber optic cables, and the like. For different user equipment, a user interface 1704 may be an interface capable of externally or internally connecting the required device, and the connected device includes, but not limited to, a keypad, a display, a speaker, a microphone, a joystick, and the like.

The processor 1703 is responsible for managing the bus architecture and general processing, and the memory 1701 may store data used by the processor 1703 when performing operations.

In an embodiment, the processor 1703 may be a central processing unit (CPU), an application specific integrated circuit (ASIC), a field-programmable gate array (FPGA), or a complex programmable logic device (CPLD), the processor can also use a multi-core architecture.

The processor is configured to perform any one of the methods of the embodiments of the present application based on an obtained executable instruction by calling the computer program stored in the memory. The processor and memory may also be physically separated.

The processor 1703 is used for reading the computer program in the memory 1701 and perform operations of:
determining that a clock synchronization status has changed, initiating a random access procedure to a network device; and receiving clock quality information transmitted from the network device during the random access procedure.

In some embodiments, receiving the clock quality information transmitted from the network device includes receiving a contention resolution message transmitted from the network device, where the contention resolution message carries the clock quality information.

In some embodiments, receiving the clock quality information transmitted from the network device includes receiving a downlink radio resource control (RRC) message transmitted from the network device, where the downlink RRC message carries the clock quality information.

In some embodiments, the processor 1703 is used for reading a computer program in the memory 1701 to perform operations of: transmitting a random access request message to the network device based on a dedicated random access resource and/or a dedicated random access preamble configured by the network device; where the dedicated random access resource and/or the dedicated random access preamble are dedicated to at least one UE or UE group receiving same clock quality information, or to at least one UE or UE group receiving a same category of clock quality information, or to at least one UE or UE group that retrieves clock quality information;
receiving the clock quality information transmitted from the network device includes receiving a random access response message transmitted from the network device, where the random access response message carries the clock quality information.

In some embodiments, the clock quality information is indicated by at least one of: a first indicator field in a downlink media access control (MAC) control element (CE) transmitting the contention resolution message; or a second indicator field in a MAC subheader corresponding to the downlink MAC CE transmitting the contention resolution message.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In some embodiments, the processor 1703 is used for reading a computer program in the memory 1701 to perform operations of: transmitting a retrieve clock quality information request to the network device.

In some embodiments, transmitting the retrieve clock quality information request to the network device includes: transmitting an uplink radio resource control (RRC) message to the network device, where the uplink RRC message carries the retrieve clock quality information request; where for a UE in the idle state, the uplink RRC message is an RRC connection setup request message; and for a UE in the inactive state, the uplink RRC message is an RRC connection resume request message.

In some embodiments, a connection establishment cause in the RRC connection setup request message includes the retrieve clock quality information request, or a connection resume cause in the RRC connection resume request message includes the retrieve clock quality information request, or the uplink RRC message includes an information element of the retrieve clock quality information request.

In some embodiments, transmitting the retrieve clock quality information request to the network device includes: transmitting an uplink media access control (MAC) control element (CE) to the network device, wherein the uplink MAC CE carries the retrieve clock quality information request; and the uplink MAC CE is transmitted through Msg3 of a 4-step random access procedure or MSGA of a 2-step random access procedure.

In some embodiments, the uplink MAC CE further carries identity information of the UE in the idle or inactive state.

In some embodiments, after receiving the clock quality information transmitted from the network device, the operations further include: entering an idle or inactive state.

In some embodiments, the clock quality information is a clock quality metric, or an acceptable/not acceptable indication; where the clock quality metric includes one or more of: clock accuracy; traceability to universal time coordinated (UTC) and to a global navigation satellite system (GNSS); frequency stability; a parent time source; or a clock synchronization status.

In some embodiments, the clock quality information is an acceptable/not acceptable indication.

It should be noted here that the above-mentioned terminal according to the embodiments of the present application can implement all the method steps implemented by the above-mentioned method embodiments, and can achieve the same effect. The same parts and beneficial effects as the same method embodiments will not be repeated here.

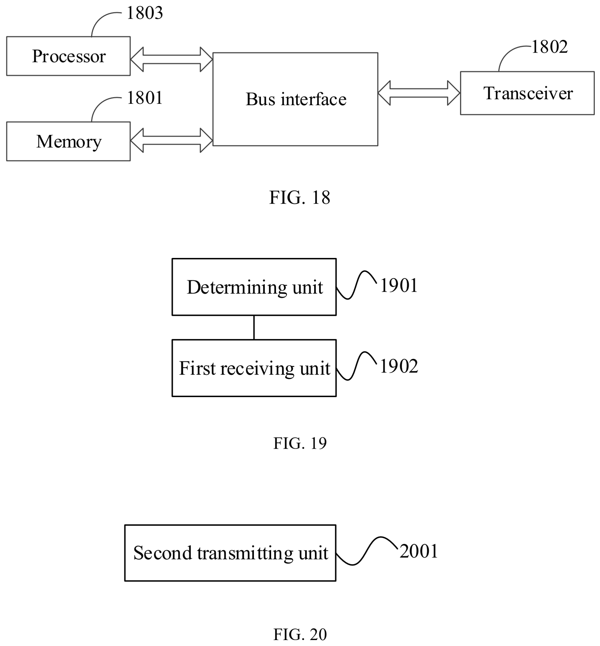

FIG. 18 is a schematic structural diagram of a network device according to an embodiment of the present application. As shown in FIG. 18, the network device includes a memory 1801, a transceiver 1802, and a processor 1803. The memory 1801 is used for storing a computer program; and the transceiver 1802 is used for transmitting and receiving data under control of the processor 1803.

In an embodiment, the transceiver 1802 is used to receive and send data under the control of the processor 1803.

In FIG. 18, a bus architecture may include any number of interconnected buses and bridges, which are linked together through various circuits of one or more processors represented by the processor 1803 and one or more memories represented by the memory 1801. The bus architecture may also link together various other circuits, such as peripherals, voltage regulators, and power management circuits, which are well known in the art, and therefore will not be further described in the present application. The bus interface provides an interface. The transceiver 1802 may include multiple elements, i.e., include a transmitter and a receiver, units for providing communication with various other devices over transmission media including wireless channels, wired channels, fiber optic cables, and the like. The processor 1803 is responsible for managing the bus architecture and general processing, and the memory 1801 can store data used by the processor 1803 when performing operations.

The processor 1803 may be a central processing unit (CPU), an application specific integrated circuit (ASIC), a field-programmable gate array (FPGA), or a complex programmable logic device (CPLD), the processor can also use a multi-core architecture.

The processor 1803 is used for reading the computer program in the memory 1801 and perform operations of:
transmitting clock quality information to a user equipment (UE) during a random access procedure; where the UE is in an idle or inactive state, and the random access procedure is triggered in case that a clock synchronization status has changed.

In some embodiments, transmitting the clock quality information to the UE includes transmitting a contention resolution message to the UE, where the contention resolution message carries the clock quality information.

In some embodiments, clock quality information transmitted from the network device includes transmitting a downlink (RRC) message to the UE, where the downlink RRC message carries the clock quality information.

In some embodiments, the processor 1803 is used for reading a computer program in the memory 1801 to perform operations of: configuring a dedicated random access resource and/or a dedicated random access preamble for at least one UE or UE group receiving same clock quality information, or at least one UE or UE group receiving a same category of clock quality information, or at least one UE or UE group that retrieves clock quality information; and indicating a configured dedicated random access resource and/or dedicated random access preamble to the UE.

Transmitting the clock quality information to UE includes transmitting a random access response message to the UE in response to a random access request message transmitted from the UE based on the configured dedicated random access resource and/or dedicated random access preamble, where the random access response message carries the clock quality information.

In some embodiments, the clock quality information is indicated by at least one of: a first indicator field in a downlink media access control (MAC) control element (CE) transmitting the contention resolution message; or a second indicator field in a MAC subheader corresponding to the downlink MAC CE transmitting the contention resolution message.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In some embodiments, the processor 1803 is used for reading a computer program in the memory 1801 to perform operations of: receiving a retrieve clock quality information request transmitted from the UE.

In some embodiments, receiving the retrieve clock quality information request transmitted from the UE includes: receiving an uplink radio resource control (RRC) message transmitted from the UE, where the uplink RRC message carries the retrieve clock quality information request; where for a UE in the idle state, the uplink RRC message is an RRC connection setup request message; and for a UE in the inactive state, the uplink RRC message is an RRC connection resume request message.

In some embodiments, a connection establishment cause in the RRC connection setup request message includes the retrieve clock quality information request, or a connection resume cause in the RRC connection resume request message includes the retrieve clock quality information request, or the uplink RRC message includes an information element of the retrieve clock quality information request.

In some embodiments, receiving the retrieve clock quality information request transmitted from the UE includes: receiving an uplink media access control (MAC) control element (CE) transmitted from the UE, wherein the uplink MAC CE carries the retrieve clock quality information request; and the uplink MAC CE is transmitted through Msg3 of a 4-step random access procedure or MSGA of a 2-step random access procedure.

In some embodiments, the uplink MAC CE further carries identity information of the UE in the idle or inactive state.

In some embodiments, the clock quality information is a clock quality metric, or an acceptable/not acceptable indication; where the clock quality metric includes one or more of: clock accuracy; traceability to universal time coordinated (UTC) and to a global navigation satellite system (GNSS); frequency stability; a parent time source; or a clock synchronization status.

In some embodiments, the clock quality information is an acceptable/not acceptable indication.

It should be noted here that the above-mentioned network device according to the embodiments of the present application may implement all the method steps implemented by the above-mentioned method embodiments performed by the network device, and may achieve the same effect. The same parts and beneficial effects as the same method embodiments is not repeated in the present application.

FIG. 19 is a schematic structural diagram of an apparatus for clock quality information reception according to an embodiment of the present application. As shown in FIG. 19, the apparatus at least includes:
a determining unit 1901, used for determining that a clock synchronization status has changed, initiating a random access procedure to a network device; and
a first receiving unit 1902, used for receiving clock quality information transmitted from the network device during the random access procedure.

In some embodiments, the first receiving unit 1902 is further used for receiving a contention resolution message transmitted from the network device, where the contention resolution message carries the clock quality information.

In some embodiments, the first receiving unit 1902 is further used for receiving a downlink radio resource control (RRC) message transmitted from the network device, where the downlink RRC message carries the clock quality information.

In some embodiments, the apparatus further includes:
a configuration receiving unit, used for transmitting a random access request message to the network device based a dedicated random access resource and/or a dedicated random access preamble configured by the network device; where the dedicated random access resource and/or the dedicated random access preamble are dedicated to at least one UE or UE group receiving same clock quality information, or to at least one UE or UE group receiving a same category of clock quality information, or to at least one UE or UE group that retrieves clock quality information; and
the first receiving unit 1902 is further used for receiving a random access response message transmitted from the network device, where the random access response message carries the clock quality information.

In some embodiments, the clock quality information is indicated by at least one of: a first indicator field in a downlink media access control (MAC) control element (CE) transmitting the contention resolution message; or a second indicator field in a MAC subheader corresponding to the downlink MAC CE transmitting the contention resolution message.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In some embodiments, the apparatus further includes:
a first transmitting unit, used for transmitting a retrieve clock quality information request to the network device.

In some embodiments, the first transmitting unit is further used for transmitting an uplink radio resource control (RRC) message to the network device, where the uplink RRC message carries the retrieve clock quality information request; where for a UE in the idle state, the uplink RRC message is an RRC connection setup request message; and for a UE in the inactive state, the uplink RRC message is an RRC connection resume request message.

In some embodiments, a connection establishment cause in the RRC connection setup request message includes the retrieve clock quality information request, or a connection resume cause in the RRC connection resume request message includes the retrieve clock quality information request, or the uplink RRC message includes an information element of the retrieve clock quality information request.

In some embodiments, the first transmitting unit is further used for transmitting an uplink media access control (MAC) control element (CE) to the network device, wherein the uplink MAC CE carries the retrieve clock quality information request; and the uplink MAC CE is transmitted through Msg3 of a 4-step random access procedure or MSGA of a 2-step random access procedure.

In some embodiments, the uplink MAC CE further carries identity information of the UE in the idle or inactive state.

In some embodiments, the apparatus further includes:
a state changing unit, used for enabling the UE to enter an idle or inactive state.

In some embodiments, the clock quality information is a clock quality metric, or an acceptable/not acceptable indication; where the clock quality metric includes one or more of: clock accuracy; traceability to universal time coordinated (UTC) and to a global navigation satellite system (GNSS); frequency stability; a parent time source; or a clock synchronization status.

In some embodiments, the clock quality information is an acceptable/not acceptable indication.

FIG. 20 is a schematic structural diagram of an apparatus for clock quality information transmission according to an embodiment of the present application. As shown in FIG. 20, the apparatus at least includes:
a second transmitting unit 2001, used for transmitting clock quality information to a user equipment (UE) during a random access procedure; where the UE is in an idle or inactive state, and the random access procedure is triggered in case that a clock synchronization status has changed.

In some embodiments, the second transmitting unit 2001 is further used for transmitting a contention resolution message to the UE, where the contention resolution message carries the clock quality information.

In some embodiments, the second transmitting unit 2001 is further used for transmitting a downlink radio resource control (RRC) message to the UE, where the downlink RRC message carries the clock quality information.

In some embodiments, the apparatus further includes:
a configuring unit, used for configuring a dedicated random access resource and/or a dedicated random access preamble for at least one UE or UE group receiving same clock quality information, or at least one UE or UE group receiving a same category of clock quality information, or at least one UE or UE group that retrieves clock quality information; and indicating a configured dedicated random access resource and/or dedicated random access preamble to the UE; and
the second transmitting unit 2001 is further used for transmitting a random access response message to the UE in response to a random access request message transmitted from the UE based on the configured dedicated random access resource and/or dedicated random access preamble, where the random access response message carries the clock quality information.

In some embodiments, the clock quality information is indicated by at least one of: a first indicator field in a downlink media access control (MAC) control element (CE) transmitting the contention resolution message; or a second indicator field in a MAC subheader corresponding to the downlink MAC CE transmitting the contention resolution message.

In some embodiments, the first indicator field is a clock quality information field; or the first indicator field is a clock quality information field, and the downlink MAC CE containing the first indicator field further includes a UE contention resolution identity field; or the second indicator field is a clock quality information field, and the MAC subheader containing the second indicator field is further used to indicate transmission of a UE contention resolution identity MAC CE.

In some embodiments, the downlink RRC message is a downlink information transfer message carrying the clock quality information; or the downlink RRC message is an RRC connection release message carrying the clock quality information; or the downlink RRC message is an RRC reject message carrying the clock quality information.

In some embodiments, the apparatus further includes:
a second receiving unit, used for receiving a retrieve clock quality information request transmitted from the UE.

In some embodiments, receiving the retrieve clock quality information request transmitted from the UE includes: receiving an uplink radio resource control (RRC) message transmitted from the UE, where the uplink RRC message carries the retrieve clock quality information request; where for a UE in the idle state, the uplink RRC message is an RRC connection setup request message; and for a UE in the inactive state, the uplink RRC message is an RRC connection resume request message.

In some embodiments, a connection establishment cause in the RRC connection setup request message includes the retrieve clock quality information request, or a connection resume cause in the RRC connection resume request message includes the retrieve clock quality information request, or the uplink RRC message includes an information element of the retrieve clock quality information request.

In some embodiments, receiving the retrieve clock quality information request transmitted from the UE includes: receiving an uplink media access control (MAC) control element (CE) transmitted from the UE, wherein the uplink MAC CE carries the retrieve clock quality information request; and the uplink MAC CE is transmitted through Msg3 of a 4-step random access procedure or MSGA of a 2-step random access procedure.

In some embodiments, the uplink MAC CE further carries identity information of the UE in the idle or inactive state.

In some embodiments, the clock quality information is a clock quality metric, or an acceptable/not acceptable indication; where the clock quality metric includes one or more of: clock accuracy; traceability to universal time coordinated (UTC) and to a global navigation satellite system (GNSS); frequency stability; a parent time source; or a clock synchronization status.

In some embodiments, the clock quality information is an acceptable/not acceptable indication.

The methods and the apparatuses provided in the embodiments of the present application are based on the same concept, and since the principles of the methods and the apparatuses to solve the problem are similar, the implementation of the apparatuses and the methods may be referred to each other, and the details are not repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as U disk, mobile hard disk, read-only memory (ROM), random access memory (RAM), magnetic disk, or optical disk.

It should be noted here that the above-mentioned apparatuses according to the embodiments of the present application may implement all the method steps implemented by the above-mentioned method embodiments, and may achieve the same effect. The same parts and beneficial effects as the same method embodiments are not repeated here.

An embodiment of the present application further provides a non-transitory readable storage medium storing a computer program, where the computer program causes a processor to perform the methods for clock quality information reception and transmission provided in above embodiments, including:
determining that a clock synchronization status has changed, initiating a random access procedure to a network device; and receiving clock quality information transmitted from the network device during the random access procedure; or
transmitting clock quality information to a user equipment (UE) during a random access procedure; where the UE is in an idle or inactive state, and the random access procedure is triggered in case that a clock synchronization status has changed.

The non-transitory storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As appreciated by those skilled in the art, embodiments of the present disclosure may be provided as a method, a system, or a computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for clock quality information reception, performed by a user equipment (UE) in an idle or inactive state, comprising:
determining that a clock synchronization status has changed, initiating a random access procedure to a network device; and
receiving clock quality information transmitted from the network device during the random access procedure.

2. The method of claim 1, wherein receiving the clock quality information transmitted from the network device comprises:
receiving a contention resolution message transmitted from the network device, wherein the contention resolution message carries the clock quality information.

3. The method of claim 1, wherein receiving the clock quality information transmitted from the network device comprises:
receiving a downlink radio resource control (RRC) message transmitted from the network device, wherein the downlink RRC message carries the clock quality information.

4. The method of claim 1, further comprising:
transmitting a random access request message to the network device based a dedicated random access resource and/or a dedicated random access preamble configured by the network device; wherein the dedicated random access resource and/or the dedicated random access preamble are dedicated to at least one UE or UE group receiving same clock quality information, or to at least one UE or UE group receiving a same category of clock quality information, or to at least one UE or UE group that retrieves clock quality information; and
receiving clock quality information transmitted from the network device comprises:
receiving a random access response message transmitted from the network device, wherein the random access response message carries the clock quality information.

5. The method of claim 2, wherein the clock quality information is indicated through at least one of:
a first indicator field in a downlink media access control (MAC) control element (CE) transmitting the contention resolution message; or
a second indicator field in a media access control (MAC) subheader corresponding to a downlink MAC control element (CE) transmitting the contention resolution message.

6. The method of claim 5, wherein
the first indicator field is a clock quality information field; or
the first indicator field is a clock quality information field, and the downlink MAC CE containing the first indicator field further comprises a UE contention resolution identity field; or
the second indicator field is a clock quality information field, and the MAC subheader containing the second indicator field is further used to indicate transmission of a UE contention resolution identity MAC CE.

7. The method of claim 3, wherein the downlink RRC message is a downlink information transfer message carrying the clock quality information; or
the downlink RRC message is an RRC connection release message carrying the clock quality information; or
the downlink RRC message is an RRC reject message carrying the clock quality information.

8. The method of claim 1, further comprising:
transmitting a retrieve clock quality information request to the network device.

9. The method of claim 8, wherein transmitting the retrieve clock quality information request to the network device comprises:
transmitting an uplink radio resource control (RRC) message to the network device, wherein the downlink RRC message carries the retrieve clock quality information request;
wherein for a UE in the idle state, the uplink RRC message is an RRC connection setup request message; and for a UE in the inactive state, the uplink RRC message is an RRC connection resume request message.

10. The method of claim 9, wherein a connection establishment cause in the RRC connection setup request message comprises the retrieve clock quality information request, or a connection resume cause in the RRC connection resume request message comprises the retrieve clock quality information request, or the uplink RRC message comprises an information element of the retrieve clock quality information request.

11. The method of claim 8, wherein transmitting the retrieve clock quality information request to the network device comprises:
transmitting an uplink media access control (MAC) control element (CE) to the network device, wherein the uplink MAC CE carries the retrieve clock quality information request;
wherein the uplink MAC CE is transmitted through Msg3 of a 4-step random access procedure or MSGA of a 2-step random access procedure.

12. The method of claim 11, wherein the uplink MAC CE further carries identity information of the UE in the idle or inactive state.

13. The method of claim 1, wherein after receiving the clock quality information transmitted from the network device, the method further comprises:
entering an idle or inactive state.

14. The method of claim 1, wherein the clock quality information is a clock quality metric, or an acceptable/not acceptable indication;
wherein the clock quality metric comprises one or more of:
clock accuracy;
traceability to universal time coordinated (UTC) and to a global navigation satellite system (GNSS);
frequency stability;
a parent time source; or
a clock synchronization status.

15. The method of claim 2 or 4, wherein the clock quality information is an acceptable/not acceptable indication.

16. A method for clock quality information transmission, performed by a network device, comprising:
transmitting clock quality information to a user equipment (UE) during a random access procedure;
wherein the UE is in an idle or inactive state, and the random access procedure is triggered in case that a clock synchronization status has changed.

17. The method of claim 16, wherein transmitting the clock quality information to the UE comprises:
transmitting a contention resolution message to the UE, wherein the contention resolution message carries the clock quality information.

18. The method of claim 16, wherein transmitting the clock quality information to the UE comprises:
transmitting a radio resource control (RRC) message to the UE, wherein the downlink RRC message carries the clock quality information.

19. The method of claim 16, further comprising:
configuring a dedicated random access resource and/or a dedicated random access preamble for at least one UE or UE group receiving same clock quality information, or at least one UE or UE group receiving a same category of clock quality information, or at least one UE or UE group that retrieves clock quality information; and
indicating a configured dedicated random access resource and/or dedicated random access preamble to the UE;
wherein transmitting the clock quality information to the UE comprises:
transmitting a random access response message to the UE in response to a random access request message transmitted from the UE based on the configured dedicated random access resource and/or dedicated random access preamble, wherein the random access response message carries the clock quality information.

20. The method of claim 17, wherein the clock quality information is indicated through at least one of:
a first indicator field in a downlink media access control (MAC) control element (CE) transmitting the contention resolution message; or
a second indicator field in a media access control (MAC) subheader corresponding to a downlink MAC control element (CE) transmitting the contention resolution message.

21. The method of claim 20, wherein
the first indicator field is a clock quality information field; or
the first indicator field is a clock quality information field, and the downlink MAC CE containing the first indicator field further comprises a UE contention resolution identity field; or
the second indicator field is a clock quality information field, and the MAC subheader containing the second indicator field is further used to indicate transmission of a UE contention resolution identity MAC CE.

22. The method of claim 18, wherein the downlink RRC message is a downlink information transfer message carrying the clock quality information; or
the downlink RRC message is an RRC connection release message carrying the clock quality information; or
the downlink RRC message is an RRC reject message carrying the clock quality information.

23. The method of claim 16, further comprising:
receiving a retrieve clock quality information request transmitted from the UE.

24. The method of claim 23, wherein receiving the retrieve clock quality information request transmitted from the UE comprises:
receiving an uplink radio resource control (RRC) message transmitted from the UE, wherein the uplink RRC message carries the retrieve clock quality information request;
wherein for a UE in the idle state, the uplink RRC message is an RRC connection setup request message; and for a UE in the inactive state, the uplink RRC message is an RRC connection resume request message.

25. The method of claim 24, wherein a connection establishment cause in the RRC connection setup request message comprises the retrieve clock quality information request, or a connection resume cause in the RRC connection resume request message comprises the retrieve clock quality information request, or the uplink RRC message comprises an information element of the retrieve clock quality information request.

26. The method of claim 23, wherein receiving the retrieve clock quality information request transmitted from the UE comprises:
receiving an uplink media access control (MAC) control element (CE) transmitted from the UE, wherein the uplink MAC CE carries the retrieve clock quality information request;
wherein the uplink MAC CE is transmitted through Msg3 of a 4-step random access procedure or MSGA of a 2-step random access procedure.

27. The method of claim 26, wherein the uplink MAC CE further carries identity information of the UE in the idle or inactive state.

28. The method of claim 16, wherein the clock quality information is a clock quality metric, or an acceptable/not acceptable indication;
wherein the clock quality metric comprises one or more of:
clock accuracy;
traceability to universal time coordinated (UTC) and to a global navigation satellite system (GNSS);
frequency stability;
a parent time source; or
a clock synchronization status.

29. The method of claim 17 or 19, wherein the clock quality information is an acceptable/not acceptable indication.

30. A user equipment (UE), comprising a memory, a transceiver and a processor,
wherein the memory is used for storing a computer program, the transceiver is used for receiving and transmitting data under control of the processor, and the processor is used for reading the computer program in the memory and performing operations of:
determining that a clock synchronization status has changed, initiating a random access procedure to a network device; and
receiving clock quality information transmitted from the network device during the random access procedure;
wherein the UE is in an idle or inactive state.

31. The UE of claim 30, wherein receiving the clock quality information transmitted from the network device comprises:
receiving a contention resolution message transmitted from the network device, wherein the contention resolution message carries the clock quality information.

32. The UE of claim 30, wherein receiving the clock quality information transmitted from the network device comprises:
receiving a downlink radio resource control (RRC) message transmitted from the network device, wherein the downlink RRC message carries the clock quality information.

33. The UE of claim 30, wherein the processor is used for reading the computer program in the memory and performing operations of:
transmitting a random access request message to the network device based on a dedicated random access resource and/or a dedicated random access preamble configured by the network device; wherein the dedicated random access resource and/or the dedicated random access preamble are dedicated to at least one UE or UE group receiving same clock quality information, or to at least one UE or UE group receiving a same category of clock quality information, or to at least one UE or UE group that retrieves clock quality information; and
receiving clock quality information transmitted from the network device comprises:
receiving a random access response message transmitted from the network device, wherein the random access response message carries the clock quality information.

34. The UE of claim 31, wherein the clock quality information is indicated through at least one of:
a first indicator field in a downlink media access control (MAC) control element (CE) transmitting the contention resolution message; or
a second indicator field in a media access control (MAC) subheader corresponding to a downlink MAC control element (CE) transmitting the contention resolution message.

35. The UE of claim 34, wherein
the first indicator field is a clock quality information field; or
the first indicator field is a clock quality information field, and the downlink MAC CE containing the first indicator field further comprises a UE contention resolution identity field; or
the second indicator field is a clock quality information field, and the MAC subheader containing the second indicator field is further used to indicate transmission of a UE contention resolution identity MAC CE.

36. The UE of claim 30, wherein the processor is used for reading the computer program in the memory and performing operations of:
transmitting a retrieve clock quality information request to the network device.

37. The UE of claim 36, wherein transmitting the retrieve clock quality information request to the network device comprises:
transmitting an uplink radio resource control (RRC) message to the network device, wherein the downlink RRC message carries the retrieve clock quality information request;
wherein for a UE in the idle state, the uplink RRC message is an RRC connection setup request message; and for a UE in the inactive state, the uplink RRC message is an RRC connection resume request message.

38. The UE of claim 36, wherein transmitting the retrieve clock quality information request to the network device comprises:
transmitting an uplink media access control (MAC) control element (CE) to the network device, wherein the uplink MAC CE carries the retrieve clock quality information request;
wherein the uplink MAC CE is transmitted through Msg3 of a 4-step random access procedure or MSGA of a 2-step random access procedure.

39. A network device, comprising a memory, a transceiver and a processor,
wherein the memory is used for storing a computer program, the transceiver is used for receiving and transmitting data under control of the processor, and the processor is used for reading the computer program in the memory and performing operations of:
transmitting clock quality information to a user equipment (UE) during a random access procedure;
wherein the UE is in an idle or inactive state, and the random access procedure is triggered in case that a clock synchronization status has changed.

40. The network device of claim 39, wherein transmitting the clock quality information to the UE comprises:
transmitting a contention resolution message to the UE, wherein the contention resolution message carries the clock quality information.

41. The network device of claim 39, wherein transmitting the clock quality information to the UE comprises:
transmitting a radio resource control (RRC) message to the UE, wherein the downlink RRC message carries the clock quality information.

42. The network device of claim 39, wherein the processor is used for reading the computer program in the memory and performing operations of:
configuring a dedicated random access resource and/or a dedicated random access preamble for at least one UE or UE group receiving same clock quality information, or at least one UE or UE group receiving a same category of clock quality information, or at least one UE or UE group that retrieves clock quality information; and
indicating a configured dedicated random access resource and/or dedicated random access preamble to the UE;
wherein transmitting the clock quality information to the UE comprises:
transmitting a random access response message to the UE in response to a random access request message transmitted from the UE based on the configured dedicated random access resource and/or dedicated random access preamble, wherein the random access response message carries the clock quality information.

43. The network device of claim 40, wherein the clock quality information is indicated through at least one of:
a first indicator field in a downlink media access control (MAC) control element (CE) transmitting the contention resolution message; or
a second indicator field in a media access control (MAC) subheader corresponding to a downlink MAC control element (CE) transmitting the contention resolution message.

44. The network device of claim 43, wherein
the first indicator field is a clock quality information field; or
the first indicator field is a clock quality information field, and the downlink MAC CE containing the first indicator field further comprises a UE contention resolution identity field; or
the second indicator field is a clock quality information field, and the MAC subheader containing the second indicator field is further used to indicate transmission of a UE contention resolution identity MAC CE.

45. The network device of claim 39, wherein the processor is used for reading the computer program in the memory and performing operations of:
receiving a retrieve clock quality information request transmitted from the UE.

46. The network device of claim 45, wherein receiving the retrieve clock quality information request transmitted from the UE comprises:
receiving an uplink radio resource control (RRC) message transmitted from the UE, wherein the uplink RRC message carries the retrieve clock quality information request;
wherein for a UE in the idle state, the uplink RRC message is an RRC connection setup request message; and for a UE in the inactive state, the uplink RRC message is an RRC connection resume request message.

47. The network device of claim 45, wherein receiving the retrieve clock quality information request transmitted from the UE comprises:
receiving an uplink media access control (MAC) control element (CE) transmitted from the UE, wherein the uplink MAC CE carries the retrieve clock quality information request;
wherein the uplink MAC CE is transmitted through Msg3 of a 4-step random access procedure or MSGA of a 2-step random access procedure.

48. An apparatus for clock quality information reception, for use in a user equipment (UE) in an idle or inactive state, comprising:
a determining unit, used for determining that a clock synchronization status has changed, initiating a random access procedure to a network device; and
a first receiving unit, used for receiving clock quality information transmitted from the network device during the random access procedure.

49. The apparatus of claim 48, wherein the first receiving unit is further used for:
receiving a contention resolution message transmitted from the network device, wherein the contention resolution message carries the clock quality information.

50. The apparatus of claim 48, wherein the first receiving unit is further used for:
receiving a downlink radio resource control (RRC) message transmitted from the network device, wherein the downlink RRC message carries the clock quality information.

51. The apparatus of claim 48, further comprising:
a configuration receiving unit, used for transmitting a random access request message to the network device based on a dedicated random access resource and/or a dedicated random access preamble configured by the network device; wherein the dedicated random access resource and/or the dedicated random access preamble are dedicated to at least one UE or UE group receiving same clock quality information, or to at least one UE or UE group receiving a same category of clock quality information, or to at least one UE or UE group that retrieves clock quality information; and
wherein the first receiving unit is further used for:
receiving a random access response message transmitted from the network device, wherein the random access response message carries the clock quality information.

52. The apparatus of claim 49, wherein the clock quality information is indicated through at least one of:
a first indicator field in a downlink media access control (MAC) control element (CE) transmitting the contention resolution message; or
a second indicator field in a media access control (MAC) subheader corresponding to a downlink MAC control element (CE) transmitting the contention resolution message.

53. The apparatus of claim 52, wherein
the first indicator field is a clock quality information field; or
the first indicator field is a clock quality information field, and the downlink MAC CE containing the first indicator field further comprises a UE contention resolution identity field; or
the second indicator field is a clock quality information field, and the MAC subheader containing the second indicator field is further used to indicate transmission of a UE contention resolution identity MAC CE.

54. The apparatus of claim 50, wherein the downlink RRC message is a downlink information transfer message carrying the clock quality information; or
the downlink RRC message is an RRC connection release message carrying the clock quality information; or
the downlink RRC message is an RRC reject message carrying the clock quality information.

55. The apparatus of claim 48, further comprising:
a first transmitting unit, used for transmitting a retrieve clock quality information request to the network device.

56. The apparatus of claim 55, wherein the first transmitting unit is further used for:
transmitting an uplink radio resource control (RRC) message to the network device, wherein the uplink RRC message carries the retrieve clock quality information request; wherein for a UE in the idle state, the uplink RRC message is an RRC connection setup request message; and for a UE in the inactive state, the uplink RRC message is an RRC connection resume request message.

57. The apparatus of claim 56, wherein a connection establishment cause in the RRC connection setup request message comprises the retrieve clock quality information request, or a connection resume cause in the RRC connection resume request message comprises the retrieve clock quality information request, or the uplink RRC message comprises an information element of the retrieve clock quality information request.

58. The apparatus of claim 55, wherein the first transmitting unit is further used for:
transmitting an uplink media access control (MAC) control element (CE) to the network device, wherein the uplink MAC CE carries the retrieve clock quality information request; and the uplink MAC CE is transmitted through Msg3 of a 4-step random access procedure or MSGA of a 2-step random access procedure.

59. The apparatus of claim 58, wherein the uplink MAC CE further carries identity information of the UE in the idle or inactive state.

60. The apparatus of claim 48, wherein after receiving the clock quality information transmitted from the network device, the apparatus further comprises:
a state changing unit, used for enabling the UE to enter an idle or inactive state.

61. The apparatus of claim 48, wherein the clock quality information is a clock quality metric, or an acceptable/not acceptable indication;
wherein the clock quality metric comprises one or more of:
clock accuracy;
traceability to universal time coordinated (UTC) and to a global navigation satellite system (GNSS);
frequency stability;
a parent time source; or
a clock synchronization status.

62. The apparatus of claim 49 or 50, wherein the clock quality information is an acceptable/not acceptable indication.

63. An apparatus for clock quality information transmission, for use in a network device, comprising:
a second transmitting unit, used for transmitting clock quality information to a user equipment (UE) during a random access procedure;
wherein the UE is in an idle or inactive state, and the random access procedure is triggered in case that a clock synchronization status has changed.

64. The apparatus of claim 63, wherein the second transmitting unit is further used for:
transmitting a contention resolution message to the UE, wherein the contention resolution message carries the clock quality information.

65. The apparatus of claim 63, wherein the second transmitting unit is further used for:
transmitting a radio resource control (RRC) message to the UE, wherein the downlink RRC message carries the clock quality information.

66. The apparatus of claim 63, further comprising:
a configuring unit, used for configuring a dedicated random access resource and/or a dedicated random access preamble for at least one UE or UE group receiving same clock quality information, or at least one UE or UE group receiving a same category of clock quality information, or at least one UE or UE group that retrieves clock quality information; and indicating a configured dedicated random access resource and/or dedicated random access preamble to the UE; and
the second transmitting unit is further used for:
transmitting a random access response message to the UE in response to a random access request message transmitted from the UE based on the configured dedicated random access resource and/or dedicated random access preamble, wherein the random access response message carries the clock quality information.

67. The apparatus of claim 64, wherein the clock quality information is indicated through at least one of:
a first indicator field in a downlink media access control (MAC) control element (CE) transmitting the contention resolution message; or
a second indicator field in a media access control (MAC) subheader corresponding to a downlink MAC control element (CE) transmitting the contention resolution message.

68. The apparatus of claim 67, wherein
the first indicator field is a clock quality information field; or
the first indicator field is a clock quality information field, and the downlink MAC CE containing the first indicator field further comprises a UE contention resolution identity field; or
the second indicator field is a clock quality information field, and the MAC subheader containing the second indicator field is further used to indicate transmission of a UE contention resolution identity MAC CE.

69. The apparatus of claim 65, wherein the downlink RRC message is a downlink information transfer message carrying the clock quality information; or
the downlink RRC message is an RRC connection release message carrying the clock quality information; or
the downlink RRC message is an RRC reject message carrying the clock quality information.

70. The apparatus of claim 62, further comprising:
a second receiving unit, used for receiving a retrieve clock quality information request transmitted from the UE.

71. The apparatus of claim 70, wherein the second receiving unit is used for:
receiving an uplink radio resource control (RRC) message transmitted from the UE, wherein the uplink RRC message carries the retrieve clock quality information request; wherein for a UE in the idle state, the uplink RRC message is an RRC connection setup request message; and for a UE in the inactive state, the uplink RRC message is an RRC connection resume request message.

72. The apparatus of claim 71, wherein a connection establishment cause in the RRC connection setup request message comprises the retrieve clock quality information request, or a connection resume cause in the RRC connection resume request message comprises the retrieve clock quality information request, or the uplink RRC message comprises an information element of the retrieve clock quality information request.

73. The apparatus of claim 70, wherein the second receiving unit is further used for:
receiving an uplink media access control (MAC) control element (CE) transmitted from the UE, wherein the uplink MAC CE carries the retrieve clock quality information request;
wherein the uplink MAC CE is transmitted through Msg3 of a 4-step random access procedure or MSGA of a 2-step random access procedure.

74. The apparatus of claim 73, wherein the uplink MAC CE further carries identity information of the UE in the idle or inactive state.

75. The apparatus of claim 63, wherein the clock quality information is a clock quality metric, or an acceptable/not acceptable indication;
wherein the clock quality metric comprises one or more of:
clock accuracy;
traceability to universal time coordinated (UTC) and to a global navigation satellite system (GNSS);
frequency stability;
a parent time source; or
a clock synchronization status.

76. The apparatus of claim 64 or 66, wherein the clock quality information is an acceptable/not acceptable indication.

77. A non-transitory readable storage medium, storing a computer program, wherein the computer program causes a computer to perform the method for clock quality information reception of any of claims 1 to 15.

78. A non-transitory readable storage medium, storing a computer program, wherein the computer program causes a computer to perform the method for clock quality information transmission of any of claims 16 to 29.
